# EUROPEAN PATENT SPECIFICATION

(11) **EP 1 850 411 B1**
(45) Date of publication and mention of the grant of the patent: **18.04.2012**
(21) Application number: 06713974.1
(22) Date of filing: 17.02.2006
(51) Int. Cl.: H01M 4/86, H01M 4/90, H01M 4/92, H01M 4/98, H01M 8/12, H01M 4/88

(54) **POWER GENERATION CELL FOR SOLID ELECTROLYTE FUEL BATTERY AND STRUCTURE OF FUEL ELECTRODE IN SAID CELL**
STROMERZEUGUNGSZELLE FÜR EINE FESTELEKTROLYT-BRENNSTOFFBATTERIE UND STRUKTUR DER BRENNSTOFFELEKTRODE IN DER ZELLE
CELLULE DE PRODUCTION D' ÉNERGIE POUR BATTERIE DE COMBUSTIBLE ÉLECTROLYTIQUE SOLIDE ET STRUCTURE D' ÉLECTRODE COMBUSTIBLE DANS LADITE CELLULE

(30) Priority: 18.02.2005 JP 2005041558; 25.05.2005 JP 2005152711; 08.02.2006 JP 2006030732; 08.02.2006 JP 2006030733; 08.02.2006 JP 2006030734
(43) Date of publication of application: 31.10.2007
(73) Proprietor: MITSUBISHI MATERIALS CORPORATION, Chiyoda-ku, Tokyo 100-0004 (JP); The Kansai Electric Power Co., Inc., Osaka 530-8270 (JP)
(72) Inventor: Yamada,Takashi c/o Central Research Institute Naka, Naka-shi, Ibaraki 3110102 (JP); Komada, Norikazu c/o Central Research Institute Naka, Naka-shi, Ibaraki 3110102 (JP)
(74) Representative: Gillard, Richard Edward
(86) International application number: PCT/JP2006/302833
(87) International publication number: WO 2006/088133

(56) References cited:
- EP-A- 1 453 132
- WO-A-2005/045962
- WO-A1-2005/045962
- JP-A- 04 192 261
- JP-A- 06 140 048
- JP-A- 08 213 028
- JP-A- 10 021 932
- JP-A- 11 297 333
- JP-A- 2002 260 677
- JP-A- 2003 197 219
- JP-A- 2003 346 864
- JP-A- 2005 044 601
- JP-B2- 3 297 610
- H. UCHIDA, H. SUZUKI, M. WATANABE: "High-performance electrode for medium-temperature solid oxide fuel cells" JOURNAL OF THE ELECTROCHEMICAL SOCIETY, vol. 145, no. 2, 1998, pages 615-619, XP002533042
- A. TOMITA, D. HIRABAYASHI, T. HIBINO, M. NAGAO, M. SANO: "Single-chamber SOFCs with Ce0.9Gd0.1O1.95 electrolyte film for low-temperature operation" ELECTROCHEMICAL AND SOLID STATE LETTERS, vol. 8, no. 1, 2005, pages A63-A65, XP002533043

## Description

### Technical Field

The present invention relates to a power generation cell for a solid electrolyte fuel cell using a lanthanum gallate solid electrolyte as a solid electrolyte. Particularly, the present invention relates to the structure of a fuel electrode of the power generation cell for the solid electrolyte fuel cell.

### Background Art

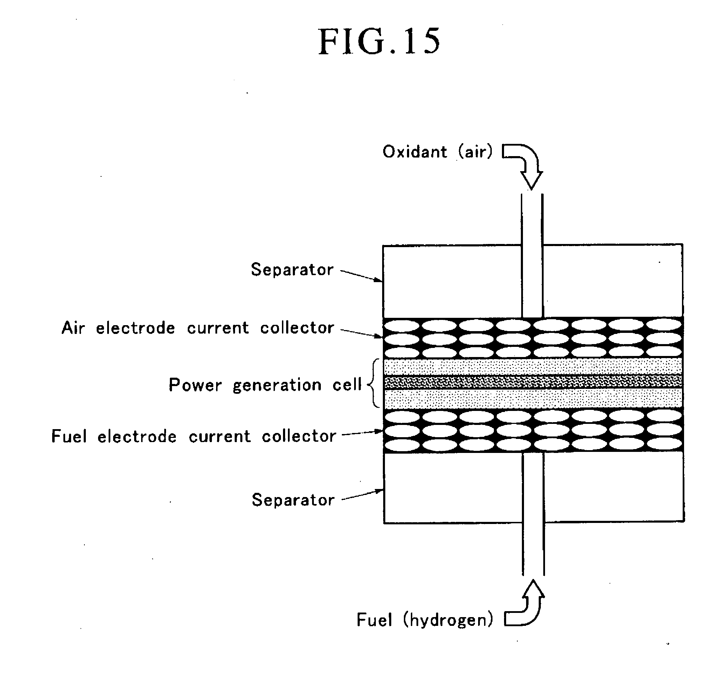

In general, a solid electrolyte fuel cell can use, as fuel, hydrogen gas, natural gas, methanol, coal gas and the like, and hence can promote the replacement of petroleum with alternate energy sources in electric power generation. Further, waste heat from the solid electrolyte fuel cell can be used, and the solid electrolyte fuel cell is thereby attracting attention from the viewpoints of resource saving and environmental issues. As shown in Figure 15, such a solid electrolyte fuel cell has a structure in which: in general, a power generation cell has a structure composed of an air electrode laminated on one side of a solid electrolyte made of an oxide and a fuel electrode laminated on the other side of the solid electrolyte; an air electrode current collector is laminated on the outside of the air electrode of the power generation cell and a fuel electrode current collector is laminated on the outside of the fuel electrode of the power generation cell; and a separator is laminated on the outside of the air electrode current collector and another separator is laminated on the outside of the fuel electrode current collector. In general, such a solid electrolyte fuel cell operates at 800 to 1000°C; however, low-temperature type solid electrolyte fuel cells having an operation temperature of 600 to 800°C have recently been proposed.

A lanthanum gallate oxide ion conductor has been known to be utilized as a solid electrolyte incorporated into the above-mentioned low-temperature type solid electrolyte fuel cell; such a lanthanum gallate oxide ion conductor has been known to be an oxide ion conductor represented by a general formula La₁₋ₓSrₓGa_{1-Y-Z}Mg_{Y}A_{Z}O₃ (in this formula, A = one or two or more of Co, Fe, Ni and Cu; X = 0.05 to 0.3; Y = 0 to 0.29; Z = 0.01 to 0.3; Y + Z = 0.025 to 0.3) (see, Patent Document 1).

Additionally, a sintered body made of ceria (hereinafter, referred to as the "B-doped ceria") doped with B (herein, B represents one or two or more of Sm, Gd, Y and Ca) and of nickel has been known to be used as the above-mentioned fuel electrode; it has also been known that the B-doped ceria is represented by a general formula Ce₁₋ₘBₘO₂ (in this formula, B represents one or two or more of Sm, Gd, Y and Ca, and m satisfies the relation 0 < m ≤ 0.4), and a sintered body made of the B-doped ceria and nickel has a structure in which the large-size B-doped ceria particles are fixed on the surface of the nickel having a porous framework structure in such a way that the large-size B-doped ceria particles surround the surface of the porous nickel framework structure so as to form a network structure of the B-doped ceria particles (see Patent Document 2).

Further, as a fuel electrode constituting a power generation cell for a solid electrolyte fuel cell, there is known a fuel electrode including a sintered body made of the B-doped ceria represented by the general formula Ce₁₋ₘBₘO₂ (in this formula, B represents one or two or more of Sm, Gd, Y and Ca, and m satisfies the relation 0 < m ≤ 0.4) and of nickel, wherein the fuel electrode has a structure having a gradient particle size in which the particle size of the B-doped ceria particles and the particle size of the nickel particles in the sintered body made of the B-doped ceria and nickel are varied in the thickness direction of the fuel electrode in such a way that the closer to the solid electrolyte these particles are, the finer the particle sizes of these particles are made to be (see Patent Document 3).

In general, in a power generation cell for a solid electrolyte fuel cell wherein the power generation cell includes as a solid electrolyte a lanthanum gallate oxide ion conductor, and a porous air electrode is formed on one side of the solid electrolyte and a porous fuel electrode is formed on the other side of the solid electrolyte, the reaction in the fuel electrode occurs mainly in the three-phase interface (the region where the fuel electrode, the electrolyte and the fuel gas are present together), and accordingly, as is well known, the three-phase interface in a power generation cell for a solid electrolyte fuel cell is desirably made as wide as possible; along this line, the power generation cell for a solid electrolyte fuel cell described in above-mentioned Patent Document 3 is such that the three-phase interface is intended to be widen by providing the fuel electrode with a structure having the gradient particle size in which the particle size of the B-doped ceria particles and the particle size of the nickel particles in the sintered body made of the B-doped ceria and nickel in the fuel electrode are varied in the thickness direction of the fuel electrode in such a way that the closer to the solid electrolyte these particles are, the finer the particle sizes of these particles are made to be.

Although the fuel electrode described in Patent Document 3 has a widened interface with the solid electrolyte, the particle size of the B-doped ceria particles and particle size of the nickel particles become finer as these particles are closer to the solid electrolyte, and consequently, the fuel electrode is poor in three-dimensional extension. Thus, the fuel electrode is poor in the permeability to the fuel gas to result in a small contact area with the fuel gas, and consequently the three-phase interface required for power generation cannot be substantially widened and the three-phase interface is not widened to an expected extent. Accordingly, solid electrolyte fuel cells having power generation cells incorporating conventional fuel electrodes have not attained sufficient characteristics.

Further, in general, it is most preferable to use pure hydrogen gas as the fuel gas for a solid electrolyte fuel cell; however, pure hydrogen gas is relatively expensive, and accordingly, in general, hydrogen gas produced by reforming hydrocarbon gas is widely used as the fuel gas for a solid electrolyte fuel cell. However, such hydrogen gas prepared by reforming hydrocarbon gas often contains a small amount of remaining hydrocarbon gas as mixed therein as a result of insufficient reformation; when such hydrogen fuel gas containing a small amount of hydrocarbon gas mixed therein is used to generate power, the power generation efficiency is decreased. Therefore, there have been demanded solid electrolyte fuel cells which are not decreased in power generation efficiency even when hydrogen fuel gas containing small amount of hydrocarbon gas mixed therein is used.

Additionally, because existing solid electrolyte fuel cells are decreased in output voltage by short term use to be short in service life, there have been demanded solid electrolyte fuel cells which are not decreased in output voltage so as to be usable in further longer term.
Patent Document 1: Japanese Patent Laid-Open No. 11-335164
Patent Document 2: Japanese Patent Laid-Open No. 11-297333
Patent Document 3: Japanese Patent Laid-Open No. 2004-55194
WO 2005/045962 and EP 1453 132 A disclose a generation cell for solid electrolyte fuel cell in which a lanthanum gallate electrolyte is used as the solid electrolyte.
Uchida et al (J. Electrochem. Soc., Vol. 145, No. 2, February 1998, pages 615-620) discloses ceria-based anodes dispersed with nanometer-sized Ru catalysts.

### Disclosure of the Invention

### [First Aspect not according to the Invention]

From the above-described viewpoints, the present inventors have made a research for the purpose of developing a solid electrolyte fuel cell usable for a further longer term. Consequently, the following research results have been obtained:
(a) As a cause to shorten the life of a solid electrolyte fuel cell, when a solid electrolyte fuel cell has been used for a long term, mutual sintering of nickel particles is further progressed in the porous nickel having a framework structure in which a network is formed by mutual sintering of the nickel particles, the nickel particles are agglomerated to become coarse and large, the porosity is thereby decreased to decrease the specific surface area of the nickel, and consequently the characteristics of the solid electrolyte fuel cell are degraded so as for the life of the fuel cell to reach the end thereof.
(b) For the purpose of preventing the nickel particles from becoming coarse and large through the mutual sintering of the nickel particles, the B-doped ceria particles are distributed in a higher density around the framework structure portions (hereinafter referred to as the framework structure neck portions) the sectional areas of which are made small by the mutual sintering of the nickel particles to be bonded to each other than in the other portions of the framework structure in such a way that the B-doped ceria particles are distributed with the highest density and attached around the framework structure neck portions; consequently, the particle growth due to the mutual sintering of the nickel particles is prevented and hence the nickel particles are prevented from becoming coarse and large; thus, the decrease rate of the specific surface area of the porous nickel is made small, and the life of the solid electrolyte fuel cell is further improved.

A first aspect not according to the present invention has been achieved on the basis of the above-mentioned research results, and has a feature in:
(1) A fuel electrode of a power generation cell for a solid electrolyte fuel cell in which fuel electrode, the B-doped ceria particles (herein, B represents one or two or more of Sm, La, Gd, Y and Ca) are attached to the surface of the framework of porous nickel having a framework structure in which a network is formed by mutual sintering of nickel particles, and the ceria particles are distributed with the highest density and attached around the framework structure neck portions.

The finer are the B-doped ceria particles attached to the surface of the framework of the porous nickel having the framework structure in which a network is formed, the more easily the B-doped ceria particles penetrate into the voids formed around the framework structure neck portions, and hence the B-doped ceria particles can be made to distribute with the highest density around the framework structure neck portions and can be attached around the framework structure neck portions so as to form thick deposit. Accordingly, the finer are the B-doped ceria particles to be used in the present invention, the more preferable they are, and the average particle sizes thereof preferably fall within a range of 100 nm or less (more preferably, 20 nm or less). When such fine B-doped ceria particles are distributed with the highest density around the framework structure neck portions to form thick deposit and then sintered, the fine B-doped ceria particles are mutually sintered to surround the framework structure neck portions to form rings. Accordingly, the present invention also has a feature in:
(2) The fuel electrode of a power generation cell for a solid electrolyte fuel cell according to the above description (1) wherein in the fuel electrode, as the B-doped ceria particles distributed with the highest density and attached around the framework structure neck portions, the fine B-doped ceria particles having an average particle size of 100 nm or less are agglomerated around the framework structure neck portions to be mutually sintered and surround the framework structure neck portions to form rings.

As the B-doped ceria particles to be used in the present invention, B-doped ceria particles represented by a general formula Ce₁₋ₘBₘO₂ (in this formula, B represents one or two or more of Sm, La, Gd, Y and Ca, and m satisfies the relation 0 < m ≤ 0.4) are used, and such B-doped ceria particles are already known substances. Accordingly, also described is:
(3) A fuel electrode of a power generation cell for a solid electrolyte fuel cell including the B-doped ceria particles represented by the general formula Ce₁₋ₘBₘO₂ (in this formula, B represents one or two or more of Sm, La, Gd, Y and Ca, and m satisfies the relation 0 < m ≤ 0.4) as the B-doped ceria particles in the above descriptions (1) and (2).

A power generation cell for a solid electrolyte fuel cell fabricated by incorporating the fuel electrode according to the above description (1), (2) or (3). Accordingly, also described is:
(4) A power generation cell for a solid electrolyte fuel cell which power generation cell includes an electrolyte including a lanthanum gallate oxide ion conductor, a porous air electrode formed on one side of the electrolyte and a porous fuel electrode formed on the other side of the electrolyte, wherein the fuel electrode thereof is the fuel electrode according to the above description (1), (2) or (3).

The electrolyte including the lanthanum gallate oxide ion conductor to be used in the power generation cell for a solid electrolyte fuel cell of the present invention is represented by a general formula La₁₋ₓSrₓGa_{1-Y-Z}Mg_{Y}A_{Z}O₃ (in this formula, A = one or two or more of Co, Fe, Ni and Cu; X = 0.05 to 0.3; Y = 0 to 0.29; Z = 0.01 to 0.3; Y + Z = 0.025 to 0.3), and such a lanthanum gallate oxide ion conductor is a generally known substance. Accordingly, also described is:
(5) The power generation cell for a solid electrolyte fuel cell according to the above description (4) wherein the lanthanum gallate oxide ion conductor is the oxide ion conductor represented by the general formula La_{1-X}Sr_{X}Ga_{1-Y-Z}Mg_{Y}A_{Z}O₃ (in this formula, A = one or two or more of Co, Fe, Ni and Cu; X = 0.05 to 0.3; Y = 0 to 0.29; Z = 0.01 to 0.3; Y + Z = 0.025 to 0.3).

Further, also described is a solid electrolyte fuel cell incorporating the power generation cell for a solid electrolyte fuel cell according to the above description (4) or (5). Accordingly, also described is:
(6) A solid electrolyte fuel cell incorporating the power generation cell for a solid electrolyte fuel cell according to the above description (4) or (5).

The solid electrolyte fuel cell incorporating the power generation cell including the fuel electrode not according to the present invention can further increase the service life thereof.

### [Second Aspect not according to the Invention]

The present inventors made researches to obtain a solid electrolyte fuel cell further higher in output power, and consequently obtained the following findings.
(a) The three-phase interface can be further widened in a power generation cell for a solid electrolyte fuel cell in which power generation cell, laminated on the solid electrolyte is a fuel electrode having a structure in which in the fuel electrode having the B-doped ceria represented by the general formula Ce₁₋ₘBₘO₂ (in this formula, B represents one or two or more of Sm, Gd, Y and Ca, and m satisfies the relation 0 < m ≤ 0.4) fixed to the surface of the framework of the porous nickel having a framework structure, B-doped ceria particles further finer than conventional ones are fixed to the surface of the framework of the porous nickel having a framework structure, and the further finer B-doped ceria particles are fixed most abundantly to the interface in which the fuel electrode contacts with the solid electrolyte and to the surface, in the vicinity of the interface, of the framework of the porous nickel.
(b) It is preferable to adopt porous nickel prepared by using nickel particles as large as or relatively coarser than the conventional ones, namely, nickel particles of 1 to 10 µm in particle size as the nickel particles to be used to prepare the porous nickel because the permeability to the fuel gas is thereby improved.
(c) The B-doped ceria particles fixed to the surface of the framework of the porous nickel are preferably extremely fine B-doped ceria particles having particle sizes of less than 100 nm.
(d) The portion in which the extremely fine B-doped ceria particles are fixed most abundantly to the interface in which the fuel electrode contacts with the solid electrolyte and to the surface, in the vicinity of the interface, of the framework of the porous nickel is preferably formed over a thickness range of 10 to 20 µm from the surface of the solid electrolyte.

A second aspect not according to the present invention has been achieved on the basis of the above-mentioned findings, and has features in:
(1) A power generation cell for a solid electrolyte fuel cell which power generation cell includes a solid electrolyte including a lanthanum gallate oxide ion conductor, a porous air electrode formed on one side of the solid electrolyte and a porous fuel electrode formed on the other side of the solid electrolyte, wherein: the fuel electrode includes a sintered body made of the B-doped ceria represented by the general formula Ce₁₋ₘBₘO₂ (in this formula, B represents one or two or more of Sm, Gd, Y and Ca, and m satisfies the relation 0 < m ≤ 0.4) and of nickel; the sintered body includes particles of the B-doped ceria as fixed to the surface of the framework of porous nickel having a framework structure; and the B-doped ceria particles are fixed most abundantly to the interface in which the fuel electrode contacts with the solid electrolyte and to the surface, in the vicinity of the interface, of the framework of the porous nickel.
(2) The power generation cell for a solid electrolyte fuel cell according to the above description (1) wherein the B-doped ceria particles fixed to the surface of the framework of the porous nickel are fine B-doped ceria particles having particle sizes of less than 100 nm.
(3) The power generation cell for a solid electrolyte fuel cell according to the above description (1) or (2) wherein the portion in which the B-doped ceria particles are fixed most abundantly to the interface in which the fuel electrode contacts with the solid electrolyte and to the surface, in the vicinity of the interface, of the framework of the porous nickel is formed in a layer over a thickness range of 10 to 20 µm from the surface of the solid electrolyte.

The solid oxide fuel cell incorporating the power generation cell including the fuel electrode according to the present invention can further increase the efficiency thereof.

### [Third Aspect not according to the Invention]

The present inventors made researches to develop a solid electrolyte fuel cell which does not decrease the power generation efficiency thereof even when a hydrogen fuel gas containing a small amount of hydrocarbon gas mixed therein is used.
Consequently, there were obtained the research results that, as compared to a solid electrolyte fuel cell having a power generation cell in which a conventional fuel electrode formed of a mixture composed of a B-doped ceria and a NiO powder is laminated, the power generation efficiency is further improved by a solid electrolyte fuel cell having a power generation cell for a solid electrolyte fuel cell which power generation cell includes a solid electrolyte including a lanthanum gallate oxide ion conductor, a porous air electrode laminated on one side of the solid electrolyte and a porous fuel electrode laminated on the other side of the solid electrolyte, wherein the fuel electrode includes a fuel electrode material prepared by supporting ruthenium metal on the B-doped ceria represented by the general formula Ce₁₋ₘBₘO₂ (in this formula, B represents one or two or more of Sm, Gd, La, Y and Ca, and m satisfies the relation 0 < m ≤ 0.4).

A third aspect not according to the present invention has been achieved on the basis of the above-mentioned research results, and has features in:
(1) A fuel electrode material constituting a fuel electrode in a power generation cell for a solid electrolyte fuel cell, wherein the fuel electrode material is prepared by supporting ruthenium metal on the B-doped ceria represented by the general formula Ce₁₋ₘBₘO₂ (in this formula, B represents one or two or more of Sm, Gd, La, Y and Ca, and m satisfies the relation 0 < m ≤ 0.4).
(2) A power generation cell for a solid electrolyte fuel cell which power generation cell includes a solid electrolyte including a lanthanum gallate oxide ion conductor, an air electrode formed on one side of the solid electrolyte and a fuel electrode formed on the other side of the solid electrolyte, wherein the fuel electrode includes the fuel electrode material prepared by supporting ruthenium metal on the B-doped ceria represented by the general formula Ce₁₋ₘBₘO₂ (in this formula, B represents one or two or more of Sm, Gd, La, Y and Ca, and m satisfies the relation 0 < m ≤ 0.4).
(3) A solid electrolyte fuel cell incorporating the power generation cell for a solid electrolyte fuel cell according to the above description (2).

The solid oxide fuel cell incorporating the power generation cell including the fuel electrode produced by using the fuel electrode material of the present invention does not decrease the power generation efficiency even when generates power by using as the fuel gas a hydrogen gas containing an extremely small amount of remaining hydrocarbon gas, and hence can generate power highly efficiently irrespective of the purity of the fuel gas.

### [Fourth Aspect of the Invention]

Further, the present inventors made researches to develop a solid electrolyte fuel cell which does not decrease the power generation efficiency even when a hydrogen gas containing a small amount of hydrocarbon gas mixed therein is used, and consequently obtained the following findings.
(a) Even when a hydrogen gas containing a small amount of remaining hydrocarbon gas as a result of insufficient reformation is used as the fuel gas, the output power is not decreased in a solid oxide fuel cell incorporating a fuel electrode in which to the surface of the framework of porous nickel having a framework structure in which a network is formed, fixed by sintering are particles of the fuel electrode material (hereinafter referred to as the "Ru-supported B-doped ceria") prepared by supporting ruthenium metal on the B-doped ceria represented by the general formula Ce₁₋ₘBₘO₂ (in this formula, B represents one or two or more of Sm, Gd, Y and Ca, and m satisfies the relation 0 < m ≤ 0.4).
(b) The three-phase interface can be further widened by a power generation cell for a solid electrolyte fuel cell in which power generation cell, laminated on the solid electrolyte is a fuel electrode having a structure in which the extremely fine Ru-supported B-doped ceria particles obtained by making further finer the above-mentioned Ru-supported B-doped ceria particles than the conventional ones are fixed most abundantly to the interface in which the fuel electrode contacts with the solid electrolyte and to the surface, in the vicinity of the interface, of the framework of the porous nickel. Further, in such a power generation cell, by using the Ru-supported B-doped ceria as the fuel electrode material, the decrease of the power generation efficiency is prevented even when a hydrogen gas containing a small amount of hydrocarbon gas mixed therein is used as the fuel gas.
(c) The Ru-supported B-doped ceria particles fixed to the surface of the framework of the porous nickel are preferably extremely fine Ru-supported B-doped ceria particles having particle sizes of less than 100 nm.
(d) The portion in which the extremely fine Ru-supported B-doped ceria particles are fixed most abundantly to the interface in which the fuel electrode contacts with the solid electrolyte and to the surface, in the vicinity of the interface, of the framework of the porous nickel is preferably formed over a thickness range of 10 to 20 µm from the surface of the solid electrolyte.

A fourth aspect of the present invention has been achieved on the basis of the above-mentioned findings, and has features in:
(1) A power generation cell for a solid electrolyte fuel cell which power generation cell includes a solid electrolyte including a lanthanum gallate oxide ion conductor, a porous air electrode formed on one side of the solid electrolyte and a porous fuel electrode formed on the other side of the solid electrolyte, wherein in the fuel electrode, to the surface of the framework of porous nickel having a framework structure, the Ru-supported B-doped ceria particles are fixed, and the Ru-supported B-doped ceria particles are fixed most abundantly to the interface in which the fuel electrode contacts with the solid electrolyte and to the surface, in the vicinity of the interface, of the framework of the porous nickel.
(2) The power generation cell for a solid electrolyte fuel cell according to the above description (1) wherein the Ru-supported B-doped ceria particles fixed to the surface of the framework of the porous nickel are fine Ru-supported B-doped ceria particles having particle sizes of less than 100 nm.
(3) The power generation cell for a solid electrolyte fuel cell according to the above description (1) or (2) wherein the portion in which the Ru-supported B-doped ceria particles are fixed most abundantly to the interface in which the fuel electrode contacts with the solid electrolyte and to the surface, in the vicinity of the interface, of the framework of the porous nickel is formed in a layer over a thickness range of 10 to 20 µm from the surface of the solid electrolyte.

The solid oxide fuel cell incorporating the power generation cell including the fuel electrode according to the present invention does not decrease the power generation efficiency even when generates power by using as the fuel gas an insufficiently reformed hydrogen gas containing an extremely small amount of hydrocarbon gas remaining therein, and hence can generate power highly efficiently irrespective of the purity of the hydrogen gas as the fuel gas.

### [Fifth Aspect of the Invention]

Further, the present inventors made researches to develop a solid electrolyte fuel cell which does not decrease the power generation efficiency even when a hydrogen gas containing a small amount of unreformed hydrocarbon gas mixed therein is used, and consequently obtained the following findings.
(a) Even when a hydrogen gas containing a small amount of remaining unreformed hydrocarbon gas is used as the fuel gas, the output power is not decreased in a solid oxide fuel cell incorporating a fuel electrode in which to the surface of a framework of a porous mixed sintered body having a framework structure in which a network is formed by the BDC particles and nickel oxide particles, fixed by sintering are the particles of the fuel electrode material (hereinafter referred to as "Ru-supported BDC") prepared by supporting ruthenium metal on the BDC represented by the general formula Ce₁₋ₘBₘO₂ (in this formula, B represents one or two or more of Sm, Gd, Y and Ca, and m satisfies the relation 0 < m ≤ 0.4).
(b) The three-phase interface can be further widened by a power generation cell for a solid electrolyte fuel cell in which power generation cell, laminated on the solid electrolyte is a fuel electrode having a structure in which the extremely fine Ru-supported BDC particles obtained by making further finer the above-mentioned Ru-supported BDC particles than the conventional ones are fixed most abundantly to the interface in which the fuel electrode contacts with the solid electrolyte and to the surface, in the vicinity of the interface, of the framework of the porous mixed sintered body. Further, in such a power generation cell, by using the Ru-supported BDC as the fuel electrode material, the decrease of the power generation efficiency is prevented even when a hydrogen gas containing a small amount of unreformed hydrocarbon gas mixed therein is used.

(c) The Ru-supported BDC particles fixed to the surface of the framework of the porous mixed sintered body are preferably extremely fine Ru-supported BDC particles having particle sizes of less than 100 nm.
(d) The portion in which the extremely fine Ru-supported BDC particles are fixed most abundantly to the interface in which the fuel electrode contacts with the solid electrolyte and to the surface, in the vicinity of the interface, of the framework of the porous mixed sintered body is preferably formed over a thickness range of 10 to 20 µm from the surface of the solid electrolyte.

A fifth aspect of the present invention has been achieved on the basis of the above-mentioned findings, and has features in:
(1) A power generation cell for a solid electrolyte fuel cell which power generation cell includes a solid electrolyte including a lanthanum gallate oxide ion conductor, a porous air electrode formed on one side of the solid electrolyte and a porous fuel electrode formed on the other side of the solid electrolyte, wherein in the fuel electrode, to the surface of the framework of the porous mixed sintered body having a framework structure in which a network is formed by the BDC particles and nickel oxide particles, the Ru-supported BDC particles are fixed, and the Ru-supported BDC particles are fixed most abundantly to the interface in which the fuel electrode contacts with the solid electrolyte and to the surface, in the vicinity of the interface, of the framework of the porous mixed sintered body.
(2) The power generation cell for a solid electrolyte fuel cell according to the above description (1) wherein the Ru-supported BDC particles fixed to the surface of the framework of the porous mixed sintered body are fine Ru-supported BDC particles having particle sizes of less than 100 nm.
(3) The power generation cell for a solid electrolyte fuel cell according to the above description (1) or (2) wherein the portion in which the Ru-supported BDC particles are fixed most abundantly to the interface in which the fuel electrode contacts with the solid electrolyte and to the surface, in the vicinity of the interface, of the framework of the porous mixed sintered body is formed in a layer over a thickness range of 10 to 20 µm from the surface of the solid electrolyte.

The solid oxide fuel cell incorporating the power generation cell including the fuel electrode according to the present invention does not decrease the power generation efficiency even when generates power by using as the fuel gas an insufficiently reformed hydrogen gas containing an extremely small amount of hydrocarbon gas remaining therein, and hence can generate power highly efficiently irrespective of the purity of the hydrogen gas as the fuel gas.

### Brief Description of the Drawings

Figure 1 is a schematic view illustrating the structure of a fuel electrode in a first embodiment not according to the present invention;
Figure 2A is a schematic view illustrating a production method of the fuel electrode in the first embodiment;
Figure 2B is another schematic view illustrating a production method of the fuel electrode in the first embodiment;
Figure 3 is a schematic sectional view for illustrating the structure of a fuel electrode in a second embodiment not according to the present invention;
Figure 4 is a schematic sectional view for illustrating a production method of the fuel electrode in the second embodiment;
Figure 5 is another schematic sectional view for illustrating a production method of the fuel electrode in the second embodiment;

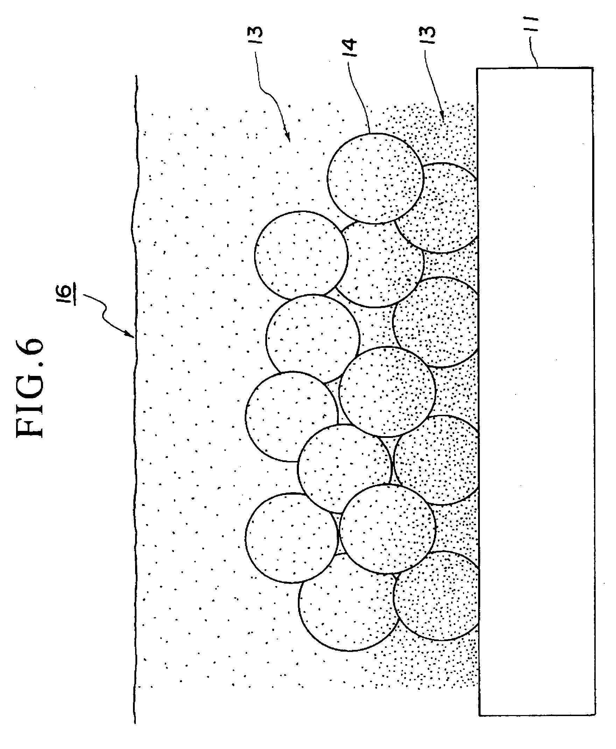

Figure 6 is another schematic sectional view for illustrating a production method of the fuel electrode in the second embodiment;
Figure 7 is a schematic sectional view for illustrating the structure of a fuel electrode in a fourth embodiment of the present invention;
Figure 8 is a schematic sectional view for illustrating a production method of the fuel electrode in the fourth embodiment of the present invention;
Figure 9 is another schematic sectional view for illustrating a production method of the fuel electrode in the fourth embodiment of the present invention;
Figure 10 is another schematic sectional view for illustrating a production method of the fuel electrode in the fourth embodiment of the present invention;
Figure 11 is a schematic sectional view for illustrating the structure of a fuel electrode in a fifth embodiment of the present invention;
Figure 12 is a schematic sectional view for illustrating a production method of the fuel electrode in the fifth embodiment of the present invention;
Figure 13 is another schematic sectional view for illustrating a production method of the fuel electrode in the fifth embodiment of the present invention;
Figure 14 is another schematic sectional view for illustrating a production method of the fuel electrode in the fifth embodiment of the present invention; and
Figure 15 is a schematic view illustrating a solid electrolyte fuel cell.

### Description of Symbols

- 1: Nickel particle
- 2: B-doped ceria particle
- 3: Framework structure neck portion
- 4: Lanthanum gallate electrolyte plate
- 5: Organic solvent slurry
- 6: Ring
- 11: Solid electrolyte
- 12: Fuel electrode
- 13: B-doped ceria particle
- 14: Porous nickel
- 15: Interface
- 16: Slurry
- 17: Organic solvent
- 21: Solid electrolyte
- 22: Fuel electrode
- 23: Ru-supported B-doped ceria particle
- 24: Porous nickel
- 24a: Porous nickel oxide sintered body
- 25: Interface
- 26: Slurry
- 27: Organic solvent
- 31: Solid electrolyte
- 32: Fuel electrode
- 33: Ru-supported BDC particle
- 34: Nickel oxide particle
- 34a: BDC particle
- 35: Interface
- 36: Slurry
- 37: Organic solvent
- 38: Porous mixed sintered body

### Best Mode for Carrying Out the Invention

### [First Embodiment]

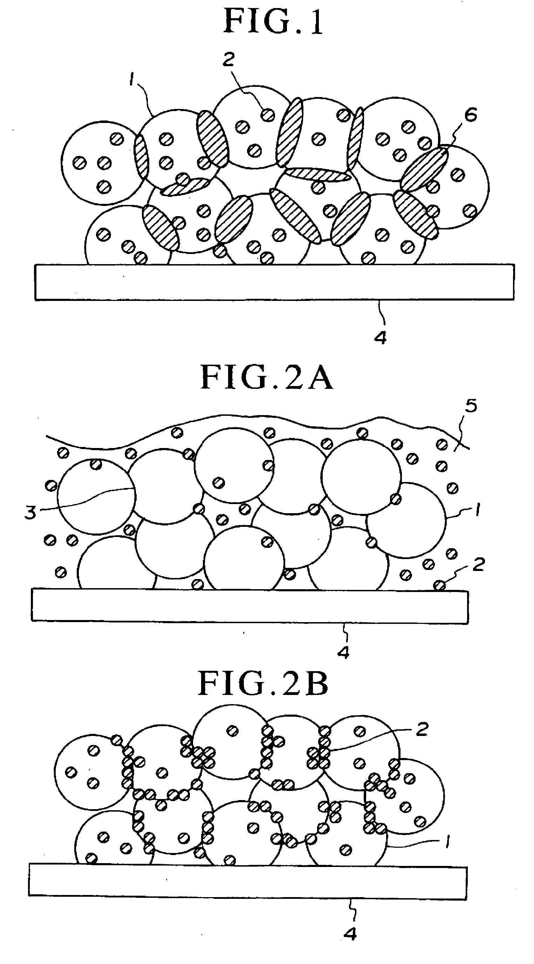

A first embodiment corresponds to the first aspect not according to the present invention.
A further detailed description will be made on the fuel electrode in a power generation cell for a solid electrolyte fuel cell of the present embodiment and a production method of the fuel electrode with reference to Figures 1, 2A and 2B.

Figures 2A and 2B schematically depict the production method of the fuel electrode in a power generation cell for a solid electrolyte fuel cell. First, as shown in Figure 2A, by mutual sintering of nickel particles 1, porous nickel having a framework structure including framework structure neck portions 3 is formed on a lanthanum gallate electrolyte plate 4, and then an organic solvent slurry 5 containing B-doped ceria particles 2 is impregnated into the porous nickel having this framework structure. In this state, the B-doped ceria particles 2 float in the organic solvent slurry 5. Subsequently by evaporating the organic solvent, the remaining B-doped ceria particles 2 are attached to the framework structure neck portions 3 in a concentrated manner. This state is illustrated in Figure 2B. The state shown in Figure 2B in which the B-doped ceria particles 2 are attached to the framework structure neck portions 3 in a concentrated manner is also included in the present invention. By subsequent sintering, the B-doped ceria particles 2 around the framework structure neck portions 3 are sintered to be bonded to each other to form rings 6 around the framework structure neck portions 3, and thus formed is the fuel electrode, as shown in Figure 1, in a power generation cell for a solid electrolyte fuel cell.

By using, as the fuel electrode of a solid electrolyte fuel cell, such a fuel electrode having a framework structure in which the fine B-doped ceria particles 2 form the rings 6 around the framework structure neck portions 3, even when a solid electrolyte fuel cell is operated for a long time, the B-doped ceria particles 2 attached around the framework structure neck portions 3 prevent the nickel particles 1 from being made coarse and large by sintering, and prevent the specific surface area of the framework structure made of nickel from being decreased, and thus, the high characteristics of a solid electrolyte fuel cell using the power generation cell incorporating this fuel electrode is maintained over a long term.

In the fuel electrode in the power generation cell for a solid electrolyte fuel cell, the B-doped ceria particles are attached to the surface of the porous nickel framework structure; the B-doped ceria particles attached to the surface of the porous nickel framework structure preferably have particle sizes as fine as to be able to penetrate into the framework structure neck portions, and hence are preferably fine B-doped ceria particles having an average particle size of 100 nm or less (more preferably 20 nm or less). This is because when the average particle size of the B-doped ceria particles comes to exceed 100 nm, the B-doped ceria particles are not filled in the voids around the framework structure neck portions of the porous framework structure, and the nickel particles are made coarse and large to unpreferably result in reduction of the specific surface area of the porous framework structure. However, when the average particle size of the B-doped ceria particles is less than 1 nm, handling of such particles becomes difficult to lead to high costs, and hence it is preferable to use the B-doped ceria particles having an average particle size of 1 nm or more.

The fuel electrode in the power generation cell for a solid electrolyte fuel cell can be prepared as follows: an organic solvent solution containing a nickel oxide powder and a fine B-doped ceria powder is blended, and further mixed with an organic binder, a dispersant and a surfactant to prepare a slurry; the slurry is applied by screen printing to the lanthanum gallate electrolyte plate to form a slurry film thereon, the slurry film is dried, and then thus processed electrolyte plate is maintained in a heated condition in the air to prepare the above-mentioned fuel electrode. In this preparation, by varying the addition amounts and the types of the organic binder, dispersant and surfactant, it is possible to vary the amount of the fine B-doped ceria powder to be deposited in the voids around the framework structure neck portions.

### [Second Embodiment]

A second embodiment corresponds to the second aspect not according to the present invention.
A specific description will be made on the power generation cell for a solid electrolyte fuel cell of the present embodiment with reference to the accompanying drawings.

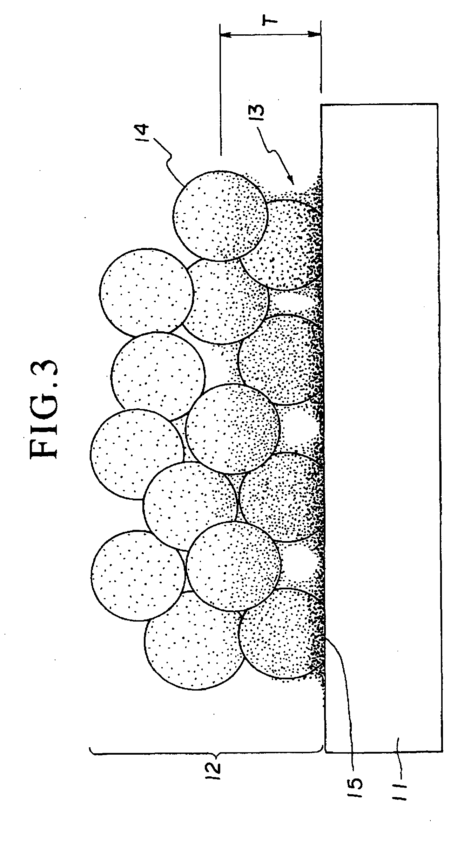

Figure 3 is a schematic sectional view illustrating the junction portion between the solid electrolyte and the fuel electrode in the power generation cell for a solid electrolyte fuel cell, the depiction of the air electrode being omitted. In Figure 3, reference numeral 11 designates a solid electrolyte, 12 designates a fuel electrode, 13 designates a B-doped ceria particle, and 14 designates porous nickel. In the fuel electrode 12, the B-doped ceria particles 13 represented by the general formula Ce₁₋ₘBₘO₂ (in this formula, B represents one or two or more of Sm, Gd, Y and Ca, and m satisfies the relation 0 < m ≤ 0.4) are fixed to the surface of the framework of the porous nickel 14; the B-doped ceria particles 13 are fixed most abundantly to the interface 15 in which the fuel electrode 12 contacts with the solid electrolyte 11 and to the surface, in the vicinity of the interface 15, of the framework of the porous nickel 14.

In Figure 3, the number of the B-doped ceria particles 13 fixed to the interface 15 and to the surface, in the vicinity of the interface, of the framework of the porous nickel is shown to be larger, and the finer are the B-doped ceria particles 13, the more preferable they are. The B-doped ceria particles are preferably less than 100 nm in particle size. Additionally, the portion in which the B-doped ceria particles 13 are fixed most abundantly to the interface 15 and to the surface, in the vicinity of the interface, of the framework of the porous nickel is more preferably formed in a layer so as for the thickness T of the portion to fall over a thickness range of 10 to 20 µm from the surface of the solid electrolyte. This is because when T is less than 10 µm, the reaction area becomes too small, and on the other hand, when T is larger than 20 µm, the permeability to the fuel gas is inhibited.

The solid electrolyte to be used in the power generation cell for a solid electrolyte fuel cell of the present invention is an oxide ion conductor represented by the general formula La_{1-X}Sr_{X}Ga_{1-Y-Z}Mg_{Y}A_{Z}O₃ (in this formula, A = one or two or more of Co, Fe, Ni and Cu; X = 0.05 to 0.3; Y = 0 to 0.29; Z = 0.01 to 0.3; Y + Z = 0.025 to 0.3). Additionally, the fuel electrode to be used in the power generation cell for a solid electrolyte fuel cell of the present invention includes sintered body in which the B-doped ceria (herein, B represents one or two or more of Sm, Gd, Y and Ca) fixed to the surface of the framework of the porous nickel having a framework structure, the B-doped ceria is an oxide represented by the general formula Ce₁₋ₘBₘO₂ (in this formula, B represents one or two or more of Sm, Gd, Y and Ca, and m satisfies the relation 0 < m ≤ 0.4). These oxides are generally known substances.

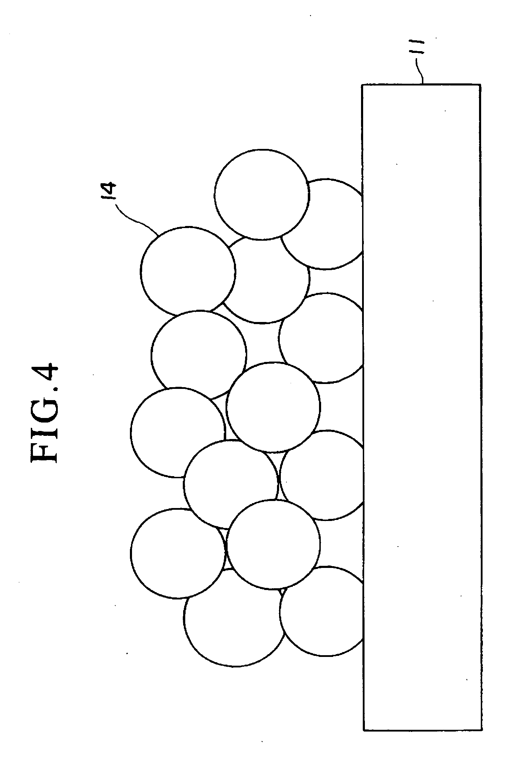

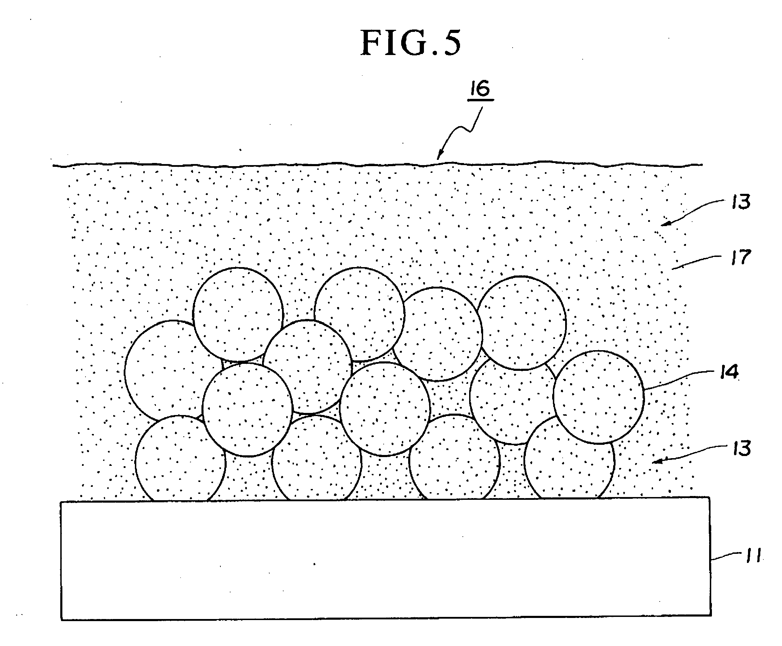

The power generation cell for a solid electrolyte fuel cell is produced as follows. First, as shown in Figure 4, a nickel oxide powder is applied by screen printing or the like to one side of the solid electrolyte 11, and baked in the air at temperatures of 1000 to 1200°C to form porous nickel 14. Next, as shown in Figure 5, a slurry 16 in which the B-doped ceria particles 13 are suspended in an organic solvent 17 is impregnated into the porous nickel 14. When the slurry 16 is allowed to stand in a state of being impregnated into the porous nickel 14 for a predetermined time, the B-doped ceria particles 13 are sedimented to be deposited in the interface 15 and in the vicinity thereof, as shown in Figure 5. When the slurry on the solid electrolyte is dried by heating in this state, the organic solvent of the slurry is evaporated. Thus, there can be produced the power generation cell for a solid electrolyte fuel cell of the present invention in which power generation cell, the B-doped ceria particles 13 are fixed most abundantly to the surface of the framework of the porous nickel 14.

### [Third Embodiment]

A third embodiment corresponds to the third aspect not according to the present invention.
The fuel electrode material in the power generation cell for a solid electrolyte fuel cell can be prepared as a fuel electrode material powder as follows. Polyvinylpyrrolidone, ruthenium chloride and B-doped ceria are added in this order to ethylene glycol, and stirred. Thereafter, a ruthenium metal-supported mixed solution is prepared by further stirring while the mixture is being increased in temperature. The thus obtained ruthenium metal-supported mixed solution is repeatedly cleaned by means of centrifugal separation to prepare a suspension of a fuel electrode material prepared by supporting ruthenium metal on the B-doped ceria. The suspension of the fuel electrode material prepared by supporting ruthenium metal on the B-doped ceria is dried and appropriately pulverized, and thus a fuel electrode material powder can be prepared. Further, a slurry of the thus obtained fuel electrode material powder prepared by supporting ruthenium metal on the B-doped ceria is prepared, and the slurry is applied to one side of the solid electrolyte to be impregnated and then dried, and thus the fuel electrode can be prepared.

As a reason for the fact that the power generation cell using the fuel electrode material including the ruthenium metal-supported B-doped ceria is improved in power generation efficiency as compared to a power generation cell using a conventional fuel electrode including a B-doped ceria mixed with a NiO powder, it is conceivable that, even when a hydrogen fuel gas containing a extremely small amount of hydrocarbon gas remaining therein is made pass through the fuel electrode current collector to reach the fuel electrode, the extremely small amount of hydrocarbon gas is made to contact with the ruthenium metal in the ruthenium metal-supported B-doped ceria of the fuel electrode of the present invention to be thereby reformed, and hence the power generation efficiency is not decreased.

The solid electrolyte to be used in the power generation cell for a solid electrolyte fuel cell is the oxide ion conductor represented by a general formula La_{1-X}Sr_{X}Ga_{1-Y-Z}Mg_{Y}A_{Z}O₃ (in this formula, A = one or two or more of Co, Fe, Ni and Cu; X = 0.05 to 0.3; Y = 0 to 0.29; Z = 0.01 to 0.3; Y + Z = 0.025 to 0.3), and such an oxide ion conductor is a generally known solid electrolyte.

### [Fourth Embodiment]

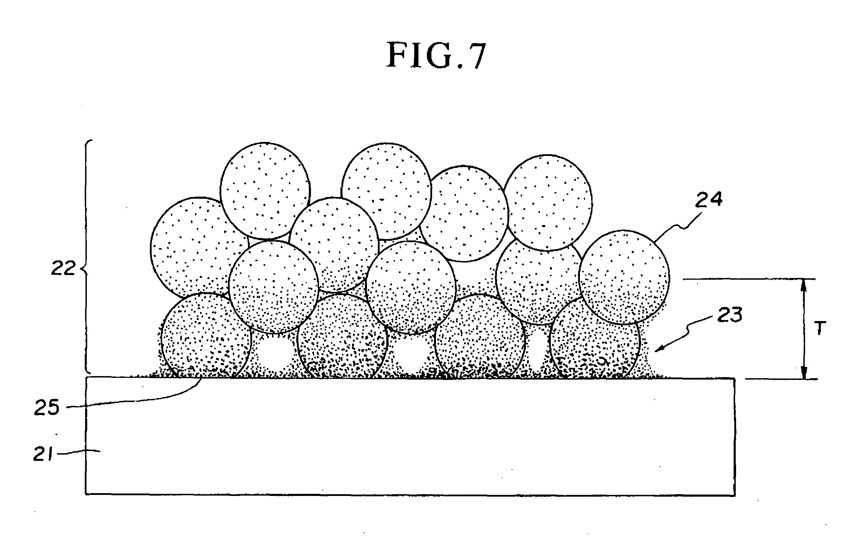

A fourth embodiment corresponds to the fourth aspect of the present invention.
A specific description will be made on the power generation cell for a solid electrolyte fuel cell of the present embodiment with reference to the accompanying drawings. Figure 7 is a schematic sectional view illustrating the junction portion between the solid electrolyte and the fuel electrode in the power generation cell for a solid electrolyte fuel cell of the present embodiment, the depiction of the air electrode being omitted. In Figure 7, reference numeral 21 designates a solid electrolyte, 22 designates a fuel electrode, 23 designates a Ru-supported B-doped ceria particle, and 24 designates porous nickel having a framework structure. The porous nickel is generated as a result of the reduction, in the course of the power generation, of the sintered body of a nickel oxide powder prepared by sintering the nickel oxide powder, the porous nickel having a framework structure. The fuel electrode 22 has a structure in which the Ru-supported B-doped ceria particles 23 prepared by supporting ruthenium metal on the B-doped ceria represented by the general formula Ce₁₋ₘBₘO₂ (in this formula, B represents one or two or more of Sm, Gd, Y and Ca, and m satisfies the relation 0 < m ≤ 0.4) are fixed to the surface of the framework of the porous nickel 24. The Ru-supported B-doped ceria particles 23 are fixed most abundantly to the interface 25 in which the fuel electrode 22 contacts with the solid electrolyte 21 and to the surface, in the vicinity of the interface, of the framework of the porous nickel 24.

In Figure 7, the number of the Ru-supported B-doped ceria particles 23 fixed to the interface 25 in which the fuel electrode 22 contacts with the solid electrolyte 21 and to the surface, in the vicinity of the interface, of the framework of the porous nickel 24 is shown to be larger. Additionally, from the viewpoint of the improvement of the permeability to the fuel gas, it is preferable to adopt porous nickel prepared by using, as the nickel particles for preparing the porous nickel, nickel particles the same as conventional ones of 1 to 10 µm in particle size or nickel particles relatively coarser than the conventional ones. The finer are the Ru-supported B-doped ceria particles 23, the more preferable they are. The Ru-supported B-doped ceria particles are preferably less than 100 nm in particle size. Additionally, the portion in which the Ru-supported B-doped ceria particles 23 are fixed most abundantly is more preferably formed in a layer so as for the thickness T of the portion to fall over a thickness range of 10 to 20 µm from the surface of the solid electrolyte, as shown in Figure 7. This is because when the thickness T is less than 10 µm, the reaction area becomes too small, and on the other hand, when the thickness T is larger than 20 µm, the permeability to the fuel gas is inhibited.

The solid electrolyte to be used in the power generation cell for a solid electrolyte fuel cell of the present invention is the already known oxide ion conductor represented by the general formula La_{1-X}Sr_{X}Ga_{1-Y-Z}Mg_{Y}A_{Z}O₃ (in this formula, A = one or two or more of Co, Fe, Ni and Cu; X = 0.05 to 0.3; Y = 0 to 0.29; Z = 0.01 to 0.3; Y + Z = 0.025 to 0.3). Additionally, the fuel electrode to be used in the power generation cell for a solid electrolyte fuel cell of the present invention includes a sintered body in which the Ru-supported B-doped ceria particles are fixed to the surface of the framework of the porous nickel having a framework structure wherein the Ru-supported B-doped ceria is a fuel electrode material prepared by supporting ruthenium (Ru) metal on the oxide represented by the general formula Ce₁₋ₘBₘO₂ (in this formula, B represents one or two or more of Sm, Gd, Y and Ca, and m satisfies the relation 0 < m ≤ 0.4).

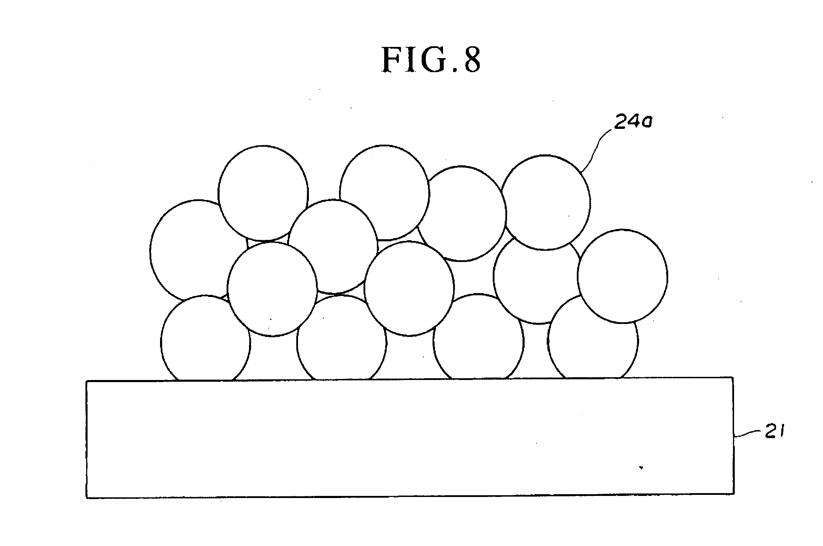

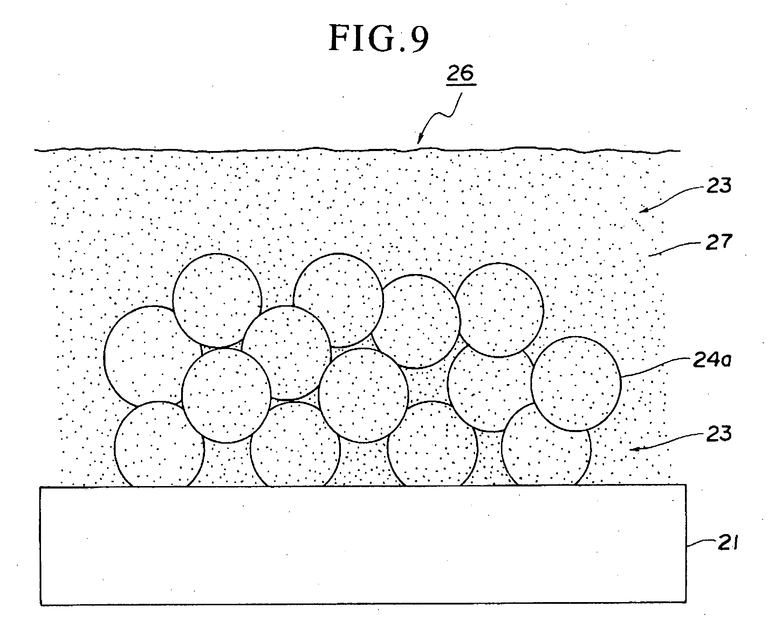

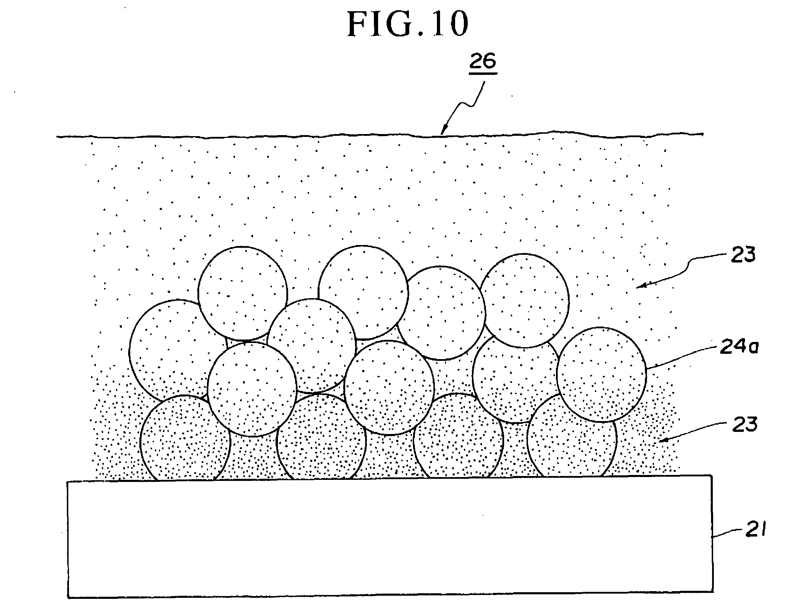

The power generation cell for a solid electrolyte fuel cell of the present invention is produced as follows. First, as shown in Figure 8, a nickel oxide powder is applied by screen printing or the like to one side of the solid electrolyte 21, and baked in the air at temperatures of 1000 to 1200°C to prepare a porous nickel oxide sintered body 24a. Next, as shown in Figure 9, a slurry 26 in which the Ru-supported B-doped ceria particles 23 are suspended in an organic solvent 27 is impregnated into the porous nickel oxide sintered body 24a. When the slurry 26 is allowed to stand in a state of being impregnated into the porous nickel oxide sintered body 24a for a predetermined time, the Ru-supported B-doped ceria particles 23 are sedimented to be deposited in the interface 25 in which the fuel electrode 22 contacts with the solid electrolyte 21 and in the vicinity of the interface, as shown in Figure 10. When the slurry on the solid electrolyte is dried by heating in the state shown in Figure 10, the organic solvent of the slurry is evaporated. Thereafter, the dried slurry on the solid electrolyte is sintered to prepare the fuel electrode in which the Ru-supported B-doped ceria particles 23 are fixed most abundantly to the surface of the framework of the porous nickel oxide sintered body 24a. By using the fuel electrode, the power generation cell is fabricated. When power is generated by flowing hydrogen gas as the fuel gas in a solid electrolyte fuel cell incorporating the power generation cell, the porous nickel oxide sintered body 24a having a framework structure is reduced to turn into the porous nickel 24 having the framework structure shown in Figure 7, and thus there can be produced the power generation cell for a solid electrolyte fuel cell of the present invention which power generation cell has the fuel electrode shown in Figure 7.

### [Fifth Embodiment]

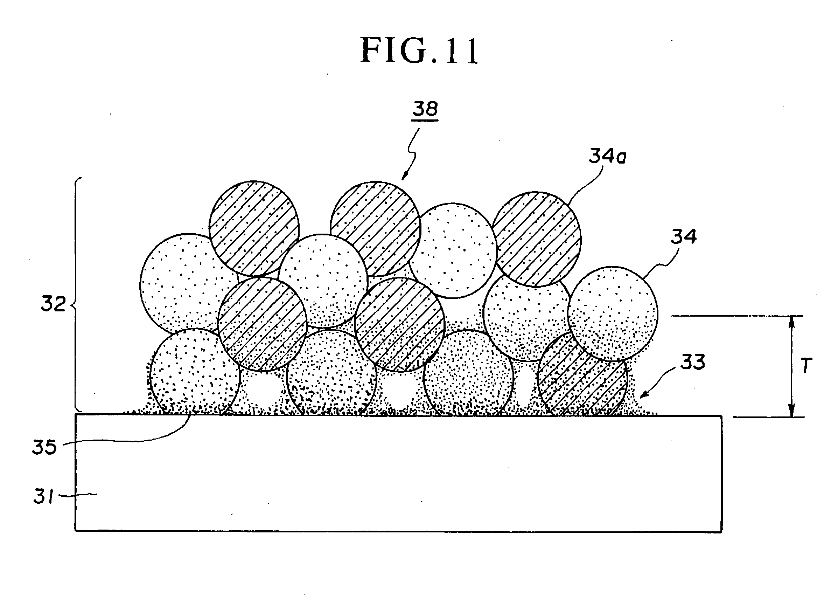

A fifth embodiment corresponds to the fifth aspect of the present invention.
A specific description will be made on the power generation cell for a solid electrolyte fuel cell of the present embodiment with reference to the accompanying drawings. Figure 11 is a schematic sectional view illustrating the junction portion between the solid electrolyte and the fuel electrode in the power generation cell for a solid electrolyte fuel cell of the present embodiment, the depiction of the air electrode being omitted. In Figure 11, reference numeral 31 designates a solid electrolyte, 32 designates a fuel electrode, 33 designates a Ru-supported BDC particle, and 34 designates a nickel oxide particle and 34a designates a BDC particle. As shown in Figure 11, the nickel oxide particles 34 and the BDC particles 34a form a porous mixed sintered body 38 having a framework structure in which a network is formed. The porous mixed sintered body 38 is prepared by sintering a mixed powder composed of a nickel oxide powder and a BDC powder. The fuel electrode 32 has a structure in which the Ru-supported BDC particles 33 prepared by supporting ruthenium metal on the BDC represented by the general formula Ce₁₋ₘBₘO₂ (in this formula, B represents one or two or more of Sm, Gd, Y and Ca, and m satisfies the relation 0 < m ≤ 0.4) are fixed to the surface of the framework of the porous mixed sintered body 38. The Ru-supported BDC particles 33 are fixed most abundantly to the interface 35 in which the fuel electrode 32 contacts with the solid electrolyte 31 and to the surface, in the vicinity of the interface, of the framework of the porous mixed sintered body 38.

In Figure 11, the number of the Ru-supported BDC particles 33 fixed to the interface 35 in which the fuel electrode 32 contacts with the solid electrolyte 31 and to the surface, in the vicinity of the interface, of the framework of the porous mixed sintered body 38 is shown to be larger. Additionally, from the viewpoint of the improvement of the permeability to the fuel gas, it is preferable to adopt a porous mixed sintered body prepared by using, as the nickel oxide particles and the BDC particles for preparing the porous mixed sintered body 38, nickel oxide particles and BDC particles the same as conventional ones of 0.5 to 10 µm in particle size or nickel oxide particles and BDC particles relatively coarser than the conventional ones. The finer are the Ru-supported BDC particles 33 fixed to the surface of the framework of the porous mixed sintered body 38, the more preferable they are. The Ru-supported BDC particles are preferably less than 100 nm in particle size. Additionally, the portion in which the Ru-supported BDC particles 33 are fixed most abundantly is more preferably formed in a layer so as for the thickness T of the portion to fall over a thickness range of 10 to 20 µm from the surface of the solid electrolyte, as shown in Figure 11. This is because when the thickness T is less than 10 µm, the reaction area becomes too small, and on the other hand, when the thickness T is larger than 20 µm, the permeability to the fuel gas is inhibited.

The solid electrolyte to be used in the power generation cell for a solid electrolyte fuel cell of the present invention is the already known oxide ion conductor represented by the general formula La_{1-X}Sr_{X}Ga_{1-Y-Z}Mg_{Y}A_{Z}O₃ (in this formula, A = one or two or more of Co, Fe, Ni and Cu; X = 0.05 to 0.3; Y = 0 to 0.29; Z = 0.01 to 0.3; Y + Z = 0.025 to 0.3). Additionally, the fuel electrode to be used in the power generation cell for a solid electrolyte fuel cell of the present invention includes a sintered body in which the Ru-supported BDC particles are fixed to the surface of the framework of the porous mixed sintered body having a framework structure wherein the Ru-supported BDC is a fuel electrode material prepared by supporting ruthenium (Ru) metal on the oxide represented by the general formula Ce₁₋ₘBₘO₂ (in this formula, B represents one or two or more of Sm, Gd, Y and Ca, and m satisfies the relation 0 < m ≤ 0.4).

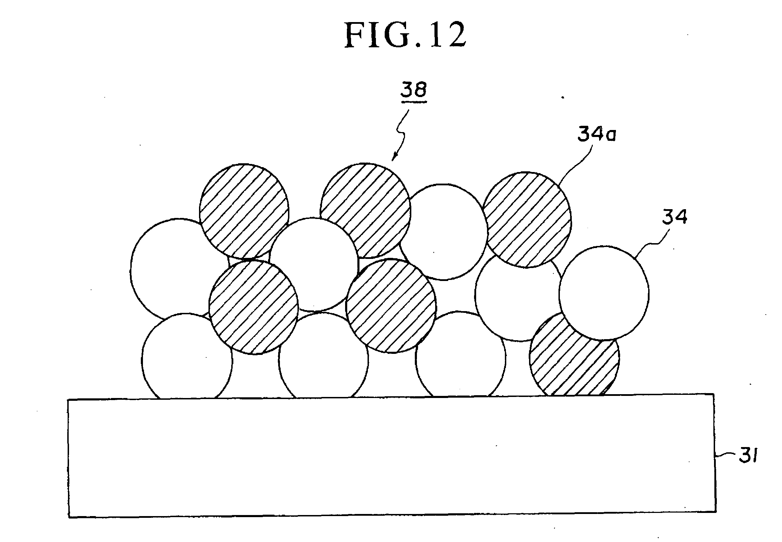

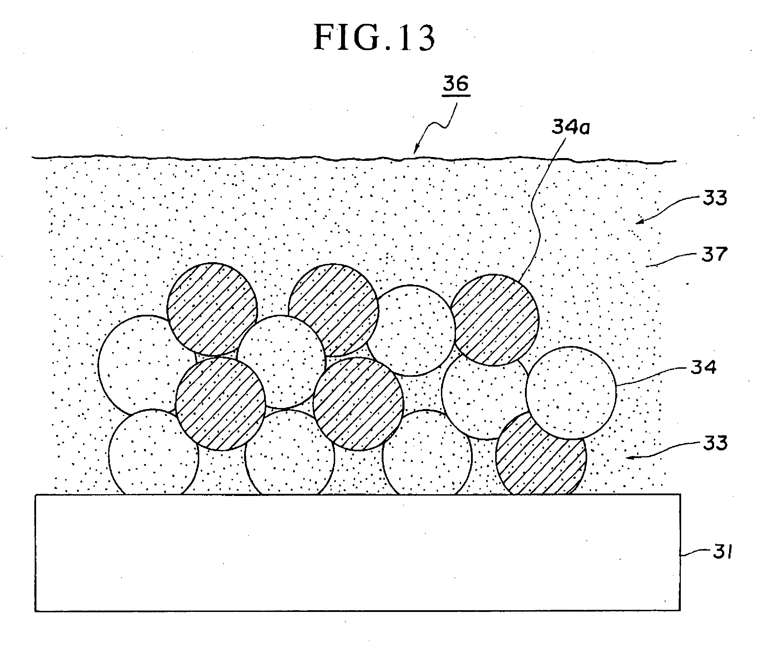

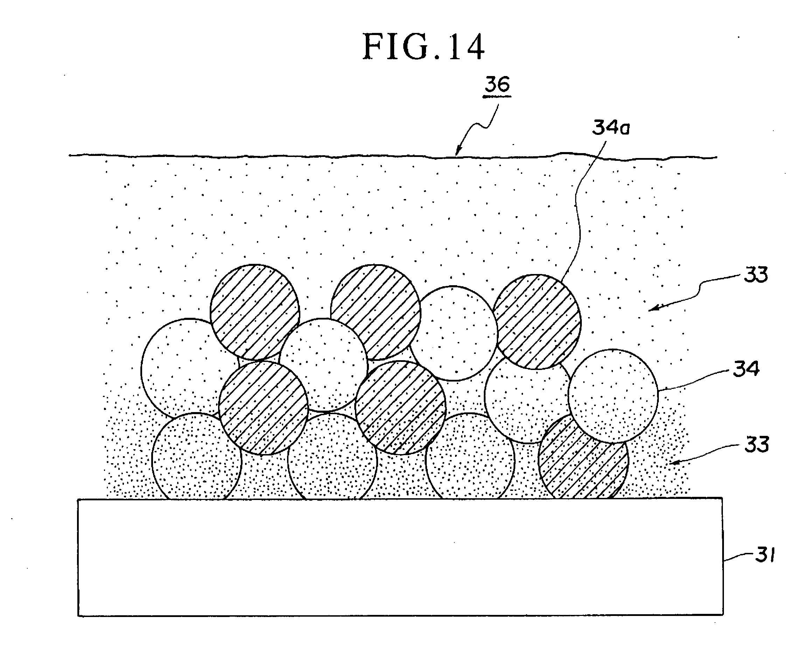

The power generation cell for a solid electrolyte fuel cell of the present invention is produced as follows. First, as shown in Figure 12, a nickel oxide powder and a BDC powder are applied by screen printing or the like to one side of the solid electrolyte 31, and baked in the air at temperatures of 1000 to 1200°C to form a porous mixed sintered body 38 having a framework structure in which a network is formed by the nickel oxide particles 34 and the BDC particles 34a. Next, as shown in Figure 13, a slurry 36 in which the Ru-supported BDC particles 33 are suspended in an organic solvent 37 is impregnated into the porous mixed sintered body 38. When the slurry 36 is allowed to stand in a state of being impregnated into the porous mixed sintered body 38 for a predetermined time, the Ru-supported BDC particles 33 are sedimented to be abundantly deposited in the interface 35 in which the fuel electrode 32 contacts with the solid electrolyte 31 and in the vicinity of the interface, as shown in Figure 14. When the slurry on the solid electrolyte is dried by heating in the state shown in Figure 14, the organic solvent of the slurry is evaporated. Thereafter, the dried slurry on the solid electrolyte is sintered to prepare the fuel electrode in which the Ru-supported BDC particles 33 are fixed to the surface of the framework of the porous mixed sintered body 38. By using the fuel electrode, the power generation cell is fabricated. When power is generated by flowing hydrogen gas as the fuel gas in a solid electrolyte fuel cell incorporating the power generation cell, the nickel oxide particles 34 constituting the porous mixed sintered body 38 having a framework structure are reduced to turn into metallic nickel particles.

### Examples

In the following, Example 1 is an example for the above-described first embodiment, Example 2 is an example for the above-described second embodiment, Examples 3 to 7 are examples for the above-described third embodiment, Example 8 is an example for the above-described fourth embodiment and Example 9 is an example for the above-described fifth embodiment.

### [Comparative Example 1, not according to the invention]

First, description will be made on the production method of the raw materials for fabricating a power generation cell.

### (a) Production of a Raw Material Powder for a Lanthanum Gallate Electrolyte

Powders of lanthanum oxide, strontium carbonate, gallium oxide, magnesium oxide and cobalt oxide were prepared, weighed out so as to give the composition represented by (La_{0.8}Sr_{0.2}) (Ga_{0.8}Mg_{0.15}CO_{0.05})O₃, mixed using a ball mill, and then maintained in the air at 1300°C for 3 hours under heating; the obtained agglomerate sintered body was pulverized using a hammer mill and then milled using a ball mill to produce a raw material powder for the lanthanum gallate electrolyte having an average particle size of 1.3 µm.

### (b) Production of an Ethanol Solution Containing an Ultrafine Powder of a Samarium-doped Ceria (hereinafter referred to as SDC)

To a mixed aqueous solution composed of 8 parts of a 0.5 mol/L aqueous solution of cerium nitrate and 2 parts of a 0.5 mol/L aqueous solution of samarium nitrate, a 1 mol/L aqueous solution of sodium hydroxide was added in drops under stirring, and thus cerium oxide and samarium oxide were coprecipitated. Then, the produced powder was sedimented by using a centrifugal separator, the supernatant liquid was discarded, the powder was added with distilled water to be washed under stirring, and the powder was resedimented by using the centrifugal separator; this cycle of operations was repeated six times to wash the powder. Then, the powder was sedimented by using the centrifugal separator, added with water and stirred, and resedimented by using the centrifugal separator; this cycle of operations was repeated three times, then the solvent was changed from water to ethanol to prepare an ethanol solution containing an ultrafine powder of SDC. A part of the thus obtained ethanol solution containing an ultrafine powder of SDC was taken out, and the particle size of the ultrafine powder of ceria was measured by means of the laser diffraction method, and the average particle size was found to be 5 nm.

### (c) Production of a Powder of Nickel Oxide

To a 1 mol/L aqueous solution of nickel nitrate, a 1 mol/L aqueous solution of sodium hydroxide was added in drops under stirring to precipitate nickel hydroxide and the nickel hydroxide was filtered off, and then the cycle of washing with pure water under stirring and filtering was repeated six times for washing with water. The nickel hydroxide thus obtained was maintained at 900°C in the air under heating for 3 hours to produce a nickel oxide powder having an average particle size of 1.1 µm.

### (d) Production of a Raw Material Powder for a Samarium Strontium Cobaltite Air Electrode

Powders of samarium oxide, strontium carbonate and cobalt oxide were prepared, weighed out so as to give a composition represented by (Sm_{0.5}Sr_{0.5})CoO₃, mixed using a ball mill, and then maintained in the air at 1200°C for 3 hours under heating; the obtained powder was milled using a ball mill to produce a raw material powder for the samarium strontium cobaltite air electrode having an average particle size of 1.1 µm.

Next, by using the prepared raw material powder, a power generation cell was produced in the following manner.
First, the raw material powder for a lanthanum gallate electrolyte produced in the above-mentioned (a) was mixed with an organic binder solution in which polyvinylbutyral and N-dioctylphthalate were dissolved in a toluene-ethanol mixed solvent, and thus a slurry was prepared; the slurry was formed into a thin plate by the doctor blade method, a circular plate was cut out from the thin plate, the circular plate was maintained in the air at 1450°C for 4 hours under heating to be sintered, and thus a disk-shaped lanthanum gallate electrolyte of 200 µm in thickness and 120 mm in diameter was produced. The nickel oxide powder prepared in the above-mentioned (c) and the ethanol solution containing the ultrafine powder of SDC prepared in the above-mentioned (b) were mixed so as to give the volume ratio of nickel oxide:SDC = 60:40; further, the mixture thus obtained was mixed with an organic binder solution in which polyvinylbutyral and N-dioctylphthalate were dissolved in a toluene-ethanol mixed solvent, a surfactant and a dispersant composed of sodium sulfonate, and thus a slurry was prepared. The slurry was applied by screen printing to the above-mentioned disk-shaped lanthanum gallate electrolyte to form a 30 µm thick slurry film; the slurry film was dried, and then maintained in the air at 1250°C for 3 hours under heating; thus, the fuel electrode was formed by baking on the above-mentioned disk-shaped lanthanum gallate electrolyte.

It is to be noted that the wet-prepared (coprecipitated) powder obtained is a dispersed ultrafine powder (nanoparticle), but when dried, immediately coagulated; accordingly, for the purpose of preparing a slurry by mixing the powder, as it is a fine powder so as to avoid coagulation, with nickel oxide, the ethanol solution containing the ultrafine powder of SDC is used. After film forming, at the time of drying, the SDC is coagulated on the surface of the nickel oxide powder, and thus, the SDC forms a state in which ceria is independent. By sintering in this state, the fuel electrode of the present invention was obtained. A part of the microstructure of the fuel electrode of the present invention obtained in the above-mentioned manner was observed with a scanning electron microscope, and consequently, it was found that, as shown in Figure 1, the fine B-doped ceria particles were concentrated in the voids around the sintering joint portions so as to form thickest deposition.

Further, the raw material powder for a samarium strontium cobaltite air electrode prepared in the above-mentioned (d) was mixed with an organic binder solution in which polyvinylbutyral and N-dioctylphthalate were dissolved in a toluene-ethanol mixed solvent, and thus a slurry was prepared. The slurry was applied by screen printing to the side of the lanthanum gallate electrolyte other than the side with the fuel electrode baked thereto, so as to form a 30 µm thick slurry film; the slurry film was dried, and then maintained in the air at 1100°C for 5 hours under heating; thus the air electrode was formed by baking.

As described above, a power generation cell for a solid electrolyte fuel cell of the present invention (hereinafter referred to as the power generation cell of the present invention), including a solid electrolyte, a fuel electrode and an air electrode was produced; a 1 mm thick fuel electrode current collector made of porous nickel was laminated on the fuel electrode of the thus obtained power generation cell of the present invention, and on the other hand, a 1.2 mm thick air electrode current collector made of porous silver was laminated on the air electrode of the power generation cell of the present invention; further, a separator was laminated on each of the fuel electrode current collector and the air electrode current collector; thus a solid electrolyte fuel cell of the present invention having a structure shown in Figure 15 was fabricated.

### [Conventional Example 1]

Further, for comparison, a conventional solid electrolyte fuel cell was fabricated in the following manner. First, a 1 N aqueous solution of nickel nitrate, a 1 N aqueous solution of cerium nitrate and a 1 N aqueous solution of samarium nitrate were respectively prepared; these aqueous solutions were weighed out to be mixed together so as for the volume ratio of NiO to (Ce_{0.8}Sm_{0.2})O₂ to be 60:40; the solution thus obtained was atomized with an atomizer, and introduced with air as carrier gas into a vertical pipe furnace to be heated to 1000°C to yield an oxide composite powder having the volume ratio of NiO to (Ce_{0.8}Sm_{0.2})O₂ to be 60:40. By using this oxide composite powder, a slurry was prepared. The slurry was used to be applied to one side of the lanthanum gallate solid electrolyte prepared in Example 1, sintered to form a fuel electrode, and further, an air electrode was formed in the same manner as in Example 1; thus a conventional power generation cell was produced. The fuel electrode formed in the conventional power generation cell was found to have a network structure in which the samarium-doped ceria (SDC) surrounded the surface of the porous nickel framework structure. A fuel electrode current collector was laminated on one side of the conventional power generation cell, and further, a separator was laminated thereon; on the other hand, an air electrode current collector was laminated on the other side of the conventional power generation cell, and further a separator was laminated thereon; thus a conventional solid electrolyte fuel cell shown in Figure 15 was fabricated.

By using the thus obtained solid electrolyte fuel cell of Example 1 according to the present invention and the thus obtained solid electrolyte fuel cell of Conventional Example 1, the power generation test was carried out under the following conditions, and the results thus obtained are shown in Table 1.

### <Power Generation Test>

Temperature: 750°C
Fuel gas: Hydrogen
Fuel gas flow rate: 0.34 L/min (= 3 cc/min/cm²)
Oxidant gas: Air
Oxidant gas flow rate: 1.7 L/min (= 15 cc/min/cm²)

A long time power generation was made under the above-described power generation conditions, the life of each of the cells was defined as the time at which the output voltage was decreased from 0.8 V to 0.6 V, the time in which the output voltage was decreased from 0.8 V to 0.6 V was measured, and the results thus obtained are shown in Table 1.

### [Table 1]

As can be seen from the results shown in Table 1, the solid electrolyte fuel cell of Example 1 has a life longer by a factor of approximately two than that of the solid electrolyte fuel cell of Conventional Example 1.

### [Comparative Example 2, not according to the invention]

Powders of lanthanum oxide, strontium carbonate, gallium oxide, magnesium oxide and cobalt oxide were prepared, weighed out so as to give the composition represented by (La_{0.8}Sr_{0.2}) (Ga_{0.8}Mg_{0.15}Co_{0.05})O₃, mixed using a ball mill, and then maintained in the air at 1200°C for 3 hours under heating; the obtained agglomerate sintered body was pulverized using a hammer mill and then milled using a ball mill to produce a raw material powder for the lanthanum gallate solid electrolyte having an average particle size of 1.3 µm. The raw material powder for the lanthanum gallate solid electrolyte was mixed with an organic binder solution in which polyvinylbutyral and N-dioctylphthalate were dissolved in a toluene-ethanol mixed solvent, and thus a slurry was prepared; the slurry was formed into a thin plate by the doctor blade method, a circular plate was cut out from the thin plate, the circular plate was maintained in the air at 1450°C for 6 hours under heating to be sintered, and thus a disk-shaped lanthanum gallate solid electrolyte plate of 200 µm in thickness and 120 mm in diameter was produced.

A nickel porous body layer was formed on the surface of the lanthanum gallate solid electrolyte plate as follows. A nickel oxide powder having an average particle size of 7 µm was mixed with an organic binder solution in which polyvinylbutyral and N-dioctylphthalate were dissolved in a toluene-ethanol mixed solvent, and thus a slurry was prepared; the slurry was applied by screen printing to one side of the lanthanum gallate solid electrolyte so as to have an average thickness of 30 µm, dried by heating to evaporate the organic binder solution, and then maintained in the air at 1250°C for 3 hours under heating to be sintered, and thus the nickel porous body layer was formed on the surface of the lanthanum gallate solid electrolyte plate.

Next, to a mixed aqueous solution composed of 8 parts of a 0.5 mol/L aqueous solution of cerium nitrate and 2 parts of a 0.5 mol/L aqueous solution of samarium nitrate, a 1 mol/L aqueous solution of sodium hydroxide was added in drops under stirring, and thus cerium oxide and samarium oxide were coprecipitated. Then, the produced powder was sedimented by using a centrifugal separator, the supernatant liquid was discarded, the powder was added with distilled water to be washed under stirring, and the powder was resedimented by using the centrifugal separator; this cycle of operations was repeated six times to wash the powder. Then, the powder was sedimented by using the centrifugal separator, added with ethanol and stirred, and resedimented by using the centrifugal separator; this cycle of operations was repeated three times, and the solution was changed from water to ethanol to prepare an ethanol solution containing an ultrafine powder of samarium-doped ceria (hereinafter referred to as SDC). A part of the thus obtained ethanol solution containing an ultrafine powder of SDC was taken out, and the particle size of the ultrafine powder of ceria was measured by means of the laser diffraction method, and the average particle size was found to be 40 nm.

The slurry composed of the ethanol solution containing the ultrafine powder of SDC was impregnated into the nickel porous body layer on the surface of the lanthanum gallate solid electrolyte plate prepared in advance; the solid electrolyte plate was maintained stationarily in such a state for 0.5 hour to sediment the ultrafine powder of SDC, then heated to 100°C for drying to evaporate the ethanol solution, and then fired at 700°C in the air to form a fuel electrode shown in Figure 3 by baking on one side of the lanthanum gallate solid electrolyte.

A part of the microstructure of the thus obtained fuel electrode formed by baking on one side of lanthanum gallate solid electrolyte was observed with a scanning electron microscope, and consequently, the average particle size thereof was found to be 60 nm.

Next, although not shown, the air electrode was formed as follows. The raw material powder for a samarium strontium cobaltite air electrode was mixed with an organic binder solution in which polyvinylbutyral and N-dioctylphthalate were dissolved in a toluene-ethanol mixed solvent, and thus a slurry was prepared. The slurry was applied by screen printing to the side of the lanthanum gallate solid electrolyte other than and opposite to the side with the fuel electrode thereon, so as to form a 30 µm thick slurry film; the slurry film was dried, and then maintained in the air at 1100°C for 5 hours under heating; thus the air electrode was formed by baking.

A power generation cell for a solid electrolyte fuel cell of the present invention (hereinafter referred to as the power generation cell of the present invention) including the thus obtained solid electrolyte, fuel electrode and air electrode was produced; a 1 mm thick fuel electrode current collector made of porous nickel was laminated on the fuel electrode of the thus obtained power generation cell of the present invention, and on the other hand, a 1.2 mm thick air electrode current collector made of porous silver was laminated on the air electrode of the power generation cell of the present invention; further, a separator was laminated on each of the fuel electrode current collector and the air electrode current collector; thus a solid electrolyte fuel cell of the present invention was fabricated.

### [Conventional Example 2]

Further, for comparison, a conventional solid electrolyte fuel cell was fabricated in the following manner. First, a 1 N aqueous solution of nickel nitrate, a 1 N aqueous solution of cerium nitrate and a 1 N aqueous solution of samarium nitrate were respectively prepared; these aqueous solutions were weighed out to be mixed together so as for the volume ratio of NiO to (Ce_{0.6}Sm_{0.2}))O₂ to be 60:40; the solution thus obtained was atomized with an atomizer, and introduced with air as carrier gas into a vertical pipe furnace to be heated to 1000°C to yield an oxide composite powder having the volume ratio of NiO to (Ce_{0.8}Sm_{0.2})O₂ to be 60 : 40. By using this oxide composite powder, a slurry was prepared. The slurry was used to be applied to one side of the prepared lanthanum gallate solid electrolyte, sintered to form a fuel electrode, and further, an air electrode was formed; thus a conventional power generation cell was produced. A fuel electrode current collector was laminated on one side of the conventional power generation cell, and further, a separator was laminated thereon; on the other hand, an air electrode current collector was laminated on the other side of the conventional power generation cell, and further a separator was laminated thereon; thus a conventional solid electrolyte fuel cell was fabricated.

By using the thus obtained solid electrolyte fuel cell of Example 2 according to the present invention and the thus obtained solid electrolyte fuel cell of Conventional Example 2, the power generation test was carried out under the following conditions.
Temperature: 750°C
Fuel gas: Hydrogen
Fuel gas flow rate: 1.02 L/min (= 9 cc/nin/cm²)
Oxidant gas: Air
Oxidant gas flow rate: 5.1 L/min (= 45 cc/nin/cm²)
Under the above-described power generation conditions, power was generated, and the load current density, fuel utilization rate, cell voltage, output power, output power density and power generation efficiency were measured. The results thus obtained are shown in Table 2.

### [Table 2]

As can be seen from the results shown in Table 2, although the solid electrolyte fuel cell of Example 2 and the solid electrolyte fuel cell of Conventional Example 2 are different from each other only in the fuel electrode structure but the same in the other structures, the solid electrolyte fuel cell of Example 2, as compared to the solid electrolyte fuel cell of Conventional Example 2, exhibits a better value for any of the load current density, fuel utilization rate, cell voltage, output power, output power density and power generation efficiency.

### [Comparative Example 3, not according to the invention]

First, powders of lanthanum oxide, strontium carbonate, gallium oxide, magnesium oxide and cobalt oxide were prepared, weighed out so as to give the composition represented by (La_{0.8}Sr_{0.2}) (Ga_{0.8}Mg_{0.15}Co_{0.05})O₃, mixed using a ball mill, and then maintained in the air at 1200°C for 3 hours under heating; the obtained agglomerate sintered body was pulverized using a hammer mill and then milled using a ball mill to produce a raw material powder for the lanthanum gallate solid electrolyte having an average particle size of 1.3 µm. The raw material powder for the lanthanum gallate solid electrolyte was mixed with an organic binder solution in which polyvinylbutyral and N-dioctylphthalate were dissolved in a toluene-ethanol mixed solvent, and thus a slurry was prepared; the slurry was formed into a thin plate by the doctor blade method, a circular plate was cut out from the thin plate, the circular plate was maintained in the air at 1450°C for 6 hours under heating to be sintered, and thus a disk-shaped lanthanum gallate solid electrolyte plate of 200 µm in thickness and 120 mm in diameter was produced.

Further, to a mixed aqueous solution composed of 8 parts of a 0.5 mol/L aqueous solution of cerium nitrate and 2 parts of a 0.5 mol/L aqueous solution of samarium nitrate, a 1 mol aqueous solution of sodium hydroxide was added in drops under stirring, and thus cerium oxide and samarium oxide were coprecipitated, filtered off, and then washed with water, by repeating six times a cycle of washing with pure water under stirring and filtering, to prepare a coprecipitation powder of cerium oxide and samarium oxide. The thus prepared coprecipitation powder was maintained in the air at 1000°C for 3 hours under heating, to prepare a samarium-doped ceria (hereinafter referred to as SDC) powder having a composition represented by (Ce_{0.8}Sm_{0.2})O₂ and having an average particle size of 0.8 µm.

Next, the obtained SDC powder was added to ethylene glycol in such a way that polyvinylpyrrolidone, ruthenium chloride and the SDC powder were added in this order to ethylene glycol, and stirred. Thereafter, a ruthenium metal-supported mixed solution was prepared by further stirring while the mixture was being increased in temperature. The thus obtained ruthenium metal-supported mixed solution was repeatedly cleaned by means of centrifugal separation to prepare a slurry of the fuel electrode material of the present invention including the ruthenium metal-supported SDC (hereinafter referred to as Ru-supported SDC).

The slurry of the fuel electrode material of the present invention was applied by screen printing to one side of the lanthanum gallate solid electrolyte plate prepared in advance so as to have a thickness of 30 µm; the applied slurry was dried and then maintained in the air at 1100°C for 5 hours under heating, and thus the fuel electrode was formed by baking.

Further, powders of reagent-grade samarium oxide, strontium carbonate and cobalt oxide were prepared, weighed out so as to give a composition represented by (Sm_{0.5}Sr_{0.5})CoO₃, mixed using a ball mill, and then maintained in the air at 1000°C for 3 hours under heating; the obtained powder was milled using a ball mill to produce a raw material powder for the samarium strontium cobaltite air electrode having an average particle size of 1.1 µm. The raw material powder for a samarium strontium cobaltite air electrode was mixed with an organic binder solution in which polyvinylbutyral and N-dioctylphthalate were dissolved in a toluene-ethanol mixed solvent, and thus a slurry was prepared. The slurry was applied by screen printing to the side of the lanthanum gallate solid electrolyte other than and opposite to the side with the fuel electrode thereon, so as to form a 30 µm thick slurry film; the slurry film was dried, and then maintained in the air at 1100°C for 5 hours under heating; thus the air electrode was formed by baking.

A power generation cell for a solid electrolyte fuel cell of the present invention (hereinafter referred to as the power generation cell of the present invention) including the thus obtained solid electrolyte, fuel electrode and air electrode was produced; a 1 mm thick fuel electrode current collector made of porous nickel was laminated on the fuel electrode of the thus obtained power generation cell of the present invention, and on the other hand, a 1.2 mm thick air electrode current collector made of porous silver was laminated on the air electrode of the power generation cell of the present invention; further, a separator was laminated on each of the fuel electrode current collector and the air electrode current collector; thus a solid electrolyte fuel cell of the present invention was fabricated.

### [Conventional Example 3]

A conventional solid electrolyte fuel cell was fabricated in the same manner as in Examples 3 except that the SDC powder prepared in Example 3 and a NiO powder were mixed together to prepare a slurry, the slurry was applied by screen printing to one side of the lanthanum gallate solid electrolyte plate prepared in Example 3 so as to have a thickness of 30 µm; after drying the applied slurry, the applied slurry was maintained in the air at 1100°C for 5 hours under heating, and thus the fuel electrode including SDC mixed with the NiO powder (hereinafter referred to as Ni-SDC) was formed by baking.

By using the thus obtained solid electrolyte fuel cell of Example 3 according to the present invention and the thus obtained solid electrolyte fuel cell of Conventional Example 3, the power generation test was carried out under the following conditions.
Temperature: 750°C
Fuel gas: Hydrogen (containing 5% of hydrocarbon)
Fuel gas flow rate: 0.34 L/min (= 3 cc/nin/cm²)
Oxidant gas: Air
Oxidant gas flow rate: 1.7 L/min (= 15 cc/nin/cm²)
Under the above-described power generation conditions, power was generated, and the cell voltage, output power, output power density and power generation efficiency were measured. The results thus obtained are shown in Table 3.

### [Table 3]

As can be seen from results shown in Table 3, although the solid electrolyte fuel cell of Example 3 and the solid electrolyte fuel cell of Conventional Example 3 are different from each other only in the fuel electrode structure but the same in the other structures, the solid electrolyte fuel cell of Example 3 incorporating the power generation cell adopting the Ru-supported SDC as the fuel electrode, as compared to the solid electrolyte fuel cell of Conventional Example 3 incorporating the power generation cell adopting the conventional Ni-SDC as the fuel electrode, exhibits a better value for any of the cell voltage, output power, output power density and power generation efficiency.

### [Comparative Example 4, not according to the invention]

To a mixed aqueous solution composed of 8 parts of a 0.5 mol/L aqueous solution of cerium nitrate and 2 parts of a 0.5 mol/L aqueous solution of gadolinium nitrate, a 1 mol/L aqueous solution of sodium hydroxide was added in drops under stirring, and thus cerium oxide and gadolinium oxide were coprecipitated, filtered off, and then washed with water, by repeating six times a cycle of washing with pure water under stirring and filtering, to prepare a coprecipitation powder of cerium oxide and gadolinium oxide. The thus prepared coprecipitation powder was maintained in the air at 1000°C for 3 hours under heating, to prepare a gadolinium-doped ceria (hereinafter referred to as GDC) powder having a composition represented by (Ce_{0.8}Gd_{0.2})O₂ and having an average particle size of 0.8 µm.

Next, the obtained GDC powder was added to ethylene glycol in such a way that polyvinylpyrrolidone, ruthenium chloride and the GDC powder were added in this order to ethylene glycol, and stirred. Thereafter, a ruthenium metal-supported mixed solution was prepared by further stirring while the mixture was being increased in temperature. The thus obtained ruthenium metal-supported mixed solution was repeatedly cleaned by means of centrifugal separation to prepare a slurry of the fuel electrode material of the present invention including the ruthenium metal-supported GDC (hereinafter referred to as Ru-supported GDC).

A power generation cell of the present invention was fabricated in the same manner as in Example 3 except that the slurry of the fuel electrode material of the present invention was applied by screen printing to one side of the lanthanum gallate solid electrolyte plate prepared in Example 3 so as to have a thickness of 30 µm; the applied slurry was dried and then maintained in the air at 1100°C for 5 hours under heating, and thus the fuel electrode was formed by baking. By using the power generation cell of the present invention, a solid electrolyte fuel cell of the present invention was fabricated.

### [Conventional Example 4]

A conventional power generation cell was fabricated in the same manner as in Example 3 except that the GDC powder prepared in Example 4 and a NiO powder were mixed together to prepare a slurry, the slurry was applied by screen printing to one side of the lanthanum gallate solid electrolyte plate prepared in Example 3 so as to have a thickness of 30 µm; after drying the applied slurry, the applied slurry was maintained in the air at 1100°C for 5 hours under heating, and thus the fuel electrode including GDC mixed with the NiO powder (hereinafter referred to as Ni-GDC) was formed by baking. By using the conventional power generation cell, a conventional solid electrolyte fuel cell was fabricated.

By using the thus obtained solid electrolyte fuel cell of Example 4 according to the present invention and the thus obtained solid electrolyte fuel cell of Conventional Example 4, the power generation test was carried out under the same conditions as in Example 3 to measure the cell voltage, output power, output power density and power generation efficiency. The results thus obtained are shown in Table 4.

### [Table 4]

As can be seen from the results shown in Table 4, although the solid electrolyte fuel cell of Example 4 and the solid electrolyte fuel cell of Conventional Example 4 are different from each other only in the fuel electrode structure but the same in the other structures, the solid electrolyte fuel cell of Example 4 incorporating the power generation cell adopting the Ru-supported GDC as the fuel electrode, as compared to the solid electrolyte fuel cell of Conventional Example 4 incorporating the power generation cell adopting the conventional Ni-GDC as the fuel electrode, exhibits a better value for any of the cell voltage, output power, output power density and power generation efficiency.

### [Comparative Example 5, not according to the invention]

To a mixed aqueous solution composed of 8 parts of a 0.5 mol/L aqueous solution of cerium nitrate and 2 parts of a 0.5 mol/L aqueous solution of lanthanum nitrate, a 1 mol/L aqueous solution of sodium hydroxide was added in drops under stirring, and thus cerium oxide and lanthanum oxide were coprecipitated, filtered off, and then washed with water, by repeating six times a cycle of washing with pure water under stirring and filtering, to prepare a coprecipitation powder of cerium oxide and lanthanum oxide. The thus prepared coprecipitation powder was maintained in the air at 1000°C for 3 hours under heating, to prepare a lanthanum-doped ceria (hereinafter referred to as LDC) powder having a composition represented by (Ce_{0.8}La_{0.2})O₂ and having an average particle size of 0.8 µm.

Next, the obtained LDC powder was added to ethylene glycol in such a way that polyvinylpyrrolidone, ruthenium chloride and the LDC powder were added in this order to ethylene glycol, and stirred. Thereafter, a ruthenium metal-supported mixed solution was prepared by further stirring while the mixture was being increased in temperature. The thus obtained ruthenium metal-supported mixed solution was repeatedly cleaned by means of centrifugal separation to prepare a slurry of the fuel electrode material of the present invention including the ruthenium metal-supported LDC (hereinafter referred to as Ru-supported LDC).

A power generation cell of the present invention was fabricated in the same manner as in Example 3 except that the slurry of the fuel electrode material of the present invention was applied by screen printing to one side of the lanthanum gallate solid electrolyte plate prepared in Example 3 so as to have a thickness of 30 µm; the applied slurry was dried and then maintained in the air at 1100°C for 5 hours under heating, and thus the fuel electrode was formed by baking. By using the power generation cell of the present invention, a solid electrolyte fuel cell of the present invention was fabricated.

### [Conventional Example 5]

A conventional power generation cell was fabricated in the same manner as in Example 3 except that the LDC powder prepared in Example 5 and a NiO powder were mixed together to prepare a slurry, the slurry was applied by screen printing to one side of the lanthanum gallate solid electrolyte plate prepared in Example 3 so as to have a thickness of 30 µm; after drying the applied slurry, the applied slurry was maintained in the air at 1100°C for 5 hours under heating, and thus the fuel electrode including LDC mixed with the NiO powder (hereinafter referred to as Ni-LDC) was formed by baking. .By using the conventional power generation cell, a conventional solid electrolyte fuel cell was fabricated.

By using the thus obtained solid electrolyte fuel cell of Example 5 according to the present invention and the thus obtained solid electrolyte fuel cell of Conventional Example 5, the power generation test was carried out under the same conditions as in Example 3 to measure the cell voltage, output power, output power density and power generation efficiency. The results thus obtained are shown in Table 5.

### [Table 5]

As can be seen from the results shown in Table 5, although the solid electrolyte fuel cell of Example 5 and the solid electrolyte fuel cell of Conventional Example 5 are different from each other only in the fuel electrode structure but the same in the other structures, the solid electrolyte fuel cell of Example 5 incorporating the power generation cell adopting the Ru-supported LDC as the fuel electrode, as compared to the solid electrolyte fuel cell of Conventional Example 5 incorporating the power generation cell adopting the common Ni-LDC as the fuel electrode, exhibits a better value for any of the cell voltage, output power, output power density and power generation efficiency.

### [Comparative Example 6, not according to the invention]

To a mixed aqueous solution composed of 8 parts of a 0.5 mol/L aqueous solution of cerium nitrate and 2 parts of a 0.5 mol/L aqueous solution of yttrium nitrate, a 1 mol/L aqueous solution of sodium hydroxide was added in drops under stirring, and thus cerium oxide and yttrium oxide were coprecipitated, filtered off, and then washed with water, by repeating six times a cycle of washing with pure water under stirring and filtering, to prepare a coprecipitation powder of cerium oxide and yttrium oxide. The thus prepared coprecipitation powder was maintained in the air at 1000°C for 3 hours under heating, to prepare a yttrium-doped ceria (hereinafter referred to as YDC) powder having a composition represented by (Ce_{0.8}Y_{0.2})O₂ and having an average particle size of 0.8 µm.

Next, the obtained YDC powder was added to ethylene glycol in such a way that polyvinylpyrrolidone, ruthenium chloride and the YDC powder were added in this order to ethylene glycol, and stirred. Thereafter, a ruthenium metal-supported mixed solution was prepared by further stirring while the mixture was being increased in temperature. The thus obtained ruthenium metal-supported mixed solution was repeatedly cleaned by means of centrifugal separation to prepare a slurry of the fuel electrode material of the present invention including the ruthenium metal-supported YDC (hereinafter referred to as Ru-supported YDC).

A power generation cell of the present invention was fabricated in the same manner as in Example 3 except that the slurry of the fuel electrode material of the present invention was applied by screen printing to one side of the lanthanum gallate solid electrolyte plate prepared in Example 3 so as to have a thickness of 30 µm; the applied slurry was dried and then maintained in the air at 1100°C for 5 hours under heating, and thus the fuel electrode was formed by baking. By using the power generation cell of the present invention, a solid electrolyte fuel cell of the present invention was fabricated.

### [Conventional Example 6]

A conventional power generation cell was fabricated in the same manner as in Example 3 except that the YDC powder prepared in Example 6 and a NiO powder were mixed together to prepare a slurry, the slurry was applied by screen printing to one side of the lanthanum gallate solid electrolyte plate prepared in Example 3 so as to have a thickness of 30 µm; after drying the applied slurry, the applied slurry was maintained in the air at 1100°C for 5 hours under heating, and thus the fuel electrode including YDC mixed with the NiO powder (hereinafter referred to as Ni-YDC) was formed by baking. By using the conventional power generation cell, a conventional solid electrolyte fuel cell was fabricated.

By using the thus obtained solid electrolyte fuel cell of Example 6 according to the present invention and the thus obtained solid electrolyte fuel cell of Conventional Example 6, the power generation test was carried out under the same conditions as in Example 3 to measure the cell voltage, output power, output power density and power generation efficiency. The results thus obtained are shown in Table 6.

### [Table 6]

As can be seen from the results shown in Table 6, although the solid electrolyte fuel cell of Example 6 and the solid electrolyte fuel cell of Conventional Example 6 are different from each other only in the fuel electrode structure but the same in the other structures, the solid electrolyte fuel cell of Example 6 incorporating the power generation cell adopting the Ru-supported YDC as the fuel electrode, as compared to the solid electrolyte fuel cell of Conventional Example 6 incorporating the power generation cell adopting the conventional Ni-YDC as the fuel electrode, exhibits a better value for any of the cell voltage, output power, output power density and power generation efficiency.

### [Comparative Example 7, not according to the invention]

To a mixed aqueous solution composed of 8 parts of a 0.5 mol/L aqueous solution of cerium nitrate and 2 parts of a 0.5 mol/L aqueous solution of calcium nitrate, a 1 mol/L aqueous solution of sodium hydroxide was added in drops under stirring, and thus cerium oxide and calcium oxide were coprecipitated, filtered off, and then washed with water, by repeating six times a cycle of washing with pure water under stirring and filtering, to prepare a coprecipitation powder of cerium oxide and calcium oxide. The thus prepared coprecipitation powder was maintained in the air at 1000°C for 3 hours under heating, to prepare a calcium-doped ceria (hereinafter referred to as CDC) powder having a composition represented by (Ce_{0.8}Ca_{0.2})O₂ and having an average particle size of 0.8 µm.

Next, the obtained CDC powder was added to ethylene glycol in such a way that polyvinylpyrrolidone, ruthenium chloride and the CDC powder were added in this order to ethylene glycol, and stirred. Thereafter, a ruthenium metal-supported mixed solution was prepared by further stirring while the mixture was being increased in temperature. The thus obtained ruthenium metal-supported mixed solution was repeatedly cleaned by means of centrifugal separation to prepare a slurry of the fuel electrode material of the present invention including the ruthenium metal-supported CDC (hereinafter referred to as Ru-supported CDC).

A power generation cell of the present invention was fabricated in the same manner as in Example 3 except that the slurry of the fuel electrode material of the present invention was applied by screen printing to one side of the lanthanum gallate solid electrolyte plate prepared in Example 3 so as to have a thickness of 30 µm; the applied slurry was dried and then maintained in the air at 1100°C for 5 hours under heating, and thus the fuel electrode was formed by baking. By using the power generation cell of the present invention, a solid electrolyte fuel cell of the present invention was fabricated.

### [Conventional Example 7]

A conventional power generation cell was fabricated in the same manner as in Example 3 except that the CDC powder prepared in Example 7 and a NiO powder were mixed together to prepare a slurry, the slurry was applied by screen printing to one side of the lanthanum gallate solid electrolyte plate prepared in Example 3 so as to have a thickness of 30 µm; after drying the applied slurry, the applied slurry was maintained in the air at 1100°C for 5 hours under heating, and thus the fuel electrode including CDC mixed with the NiO powder (hereinafter referred to as Ni-CDC) was formed by baking. By using the conventional power generation cell, a conventional solid electrolyte fuel cell was fabricated.

By using the thus obtained solid electrolyte fuel cell of Example 7 according to the present invention and the thus obtained solid electrolyte fuel cell of Conventional Example 7, the power generation test was carried out under the same conditions as in Example 3 to measure the cell voltage, output power, output power density and power generation efficiency. The results thus obtained are shown in Table 7.

### [Table 7]

As can be seen from the results shown in Table 7, although the solid electrolyte fuel cell of Example 7 and the solid electrolyte fuel cell of Conventional Example 7 are different from each other only in the fuel electrode structure but the same in the other structures, the solid electrolyte fuel cell of Example 7 incorporating the power generation cell adopting the Ru-supported CDC as the fuel electrode, as compared to the solid electrolyte fuel cell of Conventional Example 7 incorporating the power generation cell adopting the conventional Ni-CDC as the fuel electrode, exhibits a better value for any of the cell voltage, output power, output power density and power generation efficiency.

### [Example 8]

Powders of lanthanum oxide, strontium carbonate, gallium oxide, magnesium oxide and cobalt oxide were prepared, weighed out so as to give the composition represented by (La_{0.8}Sr_{0.2}) (Ga_{0.8}Mg_{0.15}Co_{0.05})O₃, mixed using a ball mill, and then maintained in the air at 1200°C for 3 hours under heating; the obtained agglomerate sintered body was pulverized using a hammer mill and then milled using a ball mill to produce a raw material powder for the lanthanum gallate solid electrolyte having an average particle size of 1.3 µm. The raw material powder for the lanthanum gallate solid electrolyte was mixed with an organic binder solution in which polyvinylbutyral and N-dioctylphthalate were dissolved in a toluene-ethanol mixed solvent, and thus a slurry was prepared; the slurry was formed into a thin plate by the doctor blade method, a circular plate was cut out from the thin plate, the circular plate was maintained in the air at 1450°C for 6 hours under heating to be sintered, and thus a disk-shaped lanthanum gallate solid electrolyte plate of 200 µm in thickness and 120 mm in diameter was produced.

A porous nickel oxide sintered body layer was formed on the surface of the lanthanum gallate solid electrolyte plate as follows. A nickel oxide powder having an average particle size of 1 µm was mixed with an organic binder solution in which polyvinylbutyral and N-dioctylphthalate were dissolved in a toluene-ethanol mixed solvent, and thus a slurry was prepared; the slurry was applied by screen printing to one side of the lanthanum gallate solid electrolyte so as to have an average thickness of 20 µm, dried by heating to evaporate the organic binder solution, and then maintained in the air at 1200°C for 3 hours under heating to be sintered, and thus the porous nickel oxide sintered body layer was formed on the surface of the lanthanum gallate solid electrolyte plate.

Further, to a mixed aqueous solution composed of 8 parts of a 0.5 mol/L aqueous solution of cerium nitrate and 2 parts of a 0.5 mol/L aqueous solution of samarium nitrate, a 1 mol/L aqueous solution of sodium hydroxide was added in drops under stirring, and thus cerium oxide and samarium oxide were coprecipitated. Then, the produced powder was sedimented by using a centrifugal separator, the supernatant liquid was discarded, the powder was added with distilled water to be washed under stirring, and the powder was resedimented by using the centrifugal separator; this cycle of operations was repeated six times to wash the powder. Then, the powder was sedimented by using the centrifugal separator, added with ethanol and stirred, and resedimented by using the centrifugal separator; this cycle of operations was repeated three times, and the solution was changed from water to ethanol to prepare an ethanol solution containing an ultrafine powder of Sm-doped ceria (hereinafter referred to as SDC). A part of the thus obtained ethanol solution containing the SDC ultrafine powder was taken out, and the particle size of the ultrafine powder of SDC was measured by means of the laser diffraction method, and the ultrafine powder of SDC was found to have an average particle size of 0.04 µm (the ultrafine powder of SDC having an average particle size of 0.04 µm is referred to as the "SDC powder").

To this ethanol solution containing the SDC powder, polyvinylpyrrolidone and ruthenium chloride were added and stirred. Thereafter, a Ru-supported mixed solution was prepared by further stirring while the mixture was being increased in temperature. The thus obtained Ru-supported mixed solution was repeatedly cleaned by means of centrifugal separation to prepare a slurry containing the ultrafine powder of the Ru-supported SDC.
A part of the thus obtained slurry containing the ultrafine powder of the Ru-supported SDC was taken out, and the particle size of the ultrafine powder of the Ru-supported SDC was measured by means of the laser diffraction method, and the average particle size was found to be 40 nm.

The slurry containing the ultrafine powder of the Ru-supported SDC was impregnated into the porous nickel oxide sintered body layer on the surface of the lanthanum gallate solid electrolyte plate prepared in advance; the solid electrolyte plate was maintained stationarily in such a state for 0.5 hour to sediment the ultrafine powder of the Ru-supported SDC, then heated to 100°C for drying to evaporate the ethanol solution, and then fired at 700°C in the air to form a fuel electrode by baking on one side of the lanthanum gallate solid electrolyte.

A part of the microstructure of the thus obtained fuel electrode formed by baking on one side of lanthanum gallate solid electrolyte was observed with a scanning electron microscope, and consequently, the average particle size of the ultrafine powder of the Ru-supported SDC was found to be 40 nm.

Next, although not shown, a power generation cell for a solid electrolyte fuel cell of the present invention (hereinafter referred to as the power generation cell of the present invention), including a solid electrolyte, a fuel electrode and an air electrode was produced as follows: the raw material powder for a samarium strontium cobaltite air electrode was mixed with an organic binder solution in which polyvinylbutyral and N-dioctylphthalate were dissolved in a toluene-ethanol mixed solvent, and thus a slurry was prepared; the slurry was applied by screen printing to the side of the lanthanum gallate solid electrolyte other than and opposite to the side with the fuel electrode thereon, so as to form a 30 µm thick slurry film; the slurry film was dried, and then maintained in the air at 1100°C for 3 hours under heating; thus the air electrode was formed by baking to produce the above-mentioned power generation cell.

A 1 mm thick fuel electrode current collector made of porous nickel was laminated on the fuel electrode of the thus obtained power generation cell of the present invention, and on the other hand, a 1.2 mm thick air electrode current collector made of porous silver was laminated on the air electrode of the power generation cell of the present invention; further, a separator was laminated on each of the fuel electrode current collector and the air electrode current collector; thus a solid electrolyte fuel cell of the present invention was fabricated.

### [Conventional Example 8]

Further, for comparison, a conventional solid electrolyte fuel cell was fabricated in the following manner. First, a 1 N aqueous solution of nickel nitrate, a 1 N aqueous solution of cerium nitrate and a 1 N aqueous solution of samarium nitrate were respectively prepared; these aqueous solutions were weighed out to be mixed together so as for the volume ratio of NiO to (Ce_{0.8}Sm_{0.2})O₂ to be 60:40; the solution thus obtained was atomized with an atomizer, and introduced with air as carrier gas into a vertical pipe furnace to be heated to 1000°C to yield an oxide composite powder having the volume ratio of NiO to (Ce_{0.8}Sm_{0.2})O₂ to be 60:40. By using this oxide composite powder, a slurry was prepared. The slurry was used to be applied to one side of the lanthanum gallate solid electrolyte prepared in advance, sintered to form a fuel electrode, and further, an air electrode was formed; thus a power generation cell was produced. A fuel electrode current collector was laminated on one side of the power generation cell, and further, a separator was laminated thereon; on the other hand, an air electrode current collector was laminated on the other side of the conventional power generation cell, and further a separator was laminated thereon; thus a conventional solid electrolyte fuel cell was fabricated.

By using the thus obtained solid electrolyte fuel cell of Example 8 according to the present invention and the thus obtained solid electrolyte fuel cell of Conventional Example 8, the power generation test was carried out under the following conditions (the conditions in which an insufficiently reformed hydrogen gas containing 5% of hydrocarbon was used), and the results thus obtained are shown in Table 8.

### <Power Generation Test>

Temperature: 750°C
Fuel gas: Hydrogen (containing 5% of hydrocarbon)
Fuel gas flow rate: 0.34 L/min (= 3 cc/nin/cm²)
Oxidant gas: Air
Oxidant gas flow rate: 1.7 L/min (= 15 cc/nin/cm²)
Under the above-described power generation conditions, power was generated, and the cell voltage, output power, output power density and power generation efficiency were measured. The results thus obtained are shown in Table 8.

### [Table 8]

As can be seen from the results shown in Table 8, although the solid electrolyte fuel cell of Example 8 and the solid electrolyte fuel cell of Conventional Example 8 are different from each other only in the fuel electrode structure but the same in the other structures, when power generation is carried out under the conditions that there is used as the fuel gas a hydrogen gas containing hydrocarbon gas remaining therein as a result of insufficient reformation, the solid electrolyte fuel cell of Example 8, as compared to the solid electrolyte fuel cell of Conventional Example 8, exhibits a better value for any of the load current density, fuel utilization rate, cell voltage, output power, output power density and power generation efficiency. It is to be noted that as a result of the power generation using as the fuel gas the insufficiently reformed hydrogen gas, the porous nickel oxide having a framework structure in the fuel electrode was reduced into the porous nickel having a framework structure.

### [Example 9]

Powders of lanthanum oxide, strontium carbonate, gallium oxide, magnesium oxide and cobalt oxide were prepared, weighed out so as to give the composition represented by (La_{0.8}Sr_{0.2}) (Ga_{0.8}Mg_{0.15}Co_{0.05})O₃, mixed using a ball mill, and then maintained in the air at 1200°C for 3 hours under heating; the obtained agglomerate sintered body was pulverized using a hammer mill and then milled using a ball mill to produce a raw material powder for the lanthanum gallate solid electrolyte having an average particle size of 1.3 µm. The raw material powder for the lanthanum gallate solid electrolyte was mixed with an organic binder solution in which polyvinylbutyral and N-dioctylphthalate were dissolved in a toluene-ethanol mixed solvent, and thus a slurry was prepared; the slurry was formed into a thin plate by the doctor blade method, a circular plate was cut out from the thin plate, the circular plate was maintained in the air at 1450°C for 6 hours under heating to be sintered, and thus a disk-shaped lanthanum gallate solid electrolyte plate of 200 µm in thickness and 120 mm in diameter was produced.

A porous mixed sintered body layer was formed on the surface of the lanthanum gallate solid electrolyte plate as follows. A NiO powder having an average particle size of 1 µm and a (Ce_{0.8}Sm_{0.2})O₂ powder having an average particle size of 0.5 µm were mixed with an organic binder solution in which polyvinylbutyral and N-dioctylphthalate were dissolved in a toluene-ethanol mixed solvent, and thus a slurry was prepared; the slurry was applied by screen printing to one side of the lanthanum gallate solid electrolyte so as to have an average thickness of 20 µm, dried by heating to evaporate the organic binder solution, and then maintained in the air at 1200°C for 3 hours under heating to be sintered, and thus the porous mixed sintered body layer was formed on the surface of the lanthanum gallate solid electrolyte plate.

Further, to a mixed aqueous solution composed of 8 parts of a 0.5 mol/L aqueous solution of cerium nitrate and 2 parts of a 0.5 mol/L aqueous solution of samarium nitrate, a 1 mol/L aqueous solution of sodium hydroxide was added in drops under stirring, and thus cerium oxide and samarium oxide were coprecipitated. Then, the produced powder was sedimented by using a centrifugal separator, the supernatant liquid was discarded, the powder was added with distilled water to be washed under stirring, and the powder was resedimented by using the centrifugal separator; this cycle of operations was repeated six times to wash the powder. Then, the powder was sedimented by using the centrifugal separator, added with ethanol and stirred, and resedimented by using the centrifugal separator; this cycle of operations was repeated three times, and the solution was changed from water to ethanol to prepare an ethanol solution containing an ultrafine powder of (Ce_{0.8}Sm_{0.2})O₂. A part of the thus obtained ethanol solution containing an ultrafine powder of (Ce_{0.8}Sm_{0.2})O₂ was taken out, and the particle size of the ultrafine powder of (Ce_{0.8}Sm_{0.2})O₂ was measured by means of the laser diffraction method, and the ultrafine powder of (Ce_{0.8}Sm_{0.2})O₂ was found to have an average particle size of 0.04 µm (the ultrafine powder of (Ce_{0.8}Sm_{0.2})O₂ having an average particle size of 0.04 µm is referred to as the "SDC ultrafine powder").

To this ethanol solution containing the SDC ultrafine powder, polyvinylpyrrolidone and ruthenium chloride were added and stirred. Thereafter, a Ru-supported mixed solution was prepared by further stirring while the mixture was being increased in temperature. The thus obtained Ru-supported mixed solution was repeatedly cleaned by means of centrifugal separation to prepare a slurry containing the Ru-supported SDC ultrafine powder.
A part of the thus obtained slurry containing the Ru-supported SDC ultrafine powder was taken out, and the particle size of the Ru-supported SDC ultrafine powder was measured by means of the laser diffraction method, and the average particle size was found to be 40 nm.

The slurry containing the Ru-supported SDC ultrafine powder was impregnated into the porous mixed sintered body layer on the surface of the lanthanum gallate solid electrolyte plate prepared in advance; the solid electrolyte plate was maintained stationarily in such a state for 0.5 hour to sediment the Ru-supported SDC ultrafine powder, then heated to 100°C for drying to evaporate the ethanol solution, and then fired at 700°C in the air to form a fuel electrode by baking on one side of the lanthanum gallate solid electrolyte.

A part of the microstructure of the thus obtained fuel electrode formed by baking on one side of lanthanum gallate solid electrolyte was observed with a scanning electron microscope, and consequently, the average particle size of the ultrafine particles of the Ru-supported SDC was found to be 40 nm.

Next, although not shown, a power generation cell for a solid electrolyte fuel cell of the present invention (hereinafter referred to as the power generation cell of the present invention), including a solid electrolyte, a fuel electrode and an air electrode was produced as follows: the raw material powder for a samarium strontium cobaltite air electrode was mixed with an organic binder solution in which polyvinylbutyral and N-dioctylphthalate were dissolved in a toluene-ethanol mixed solvent, and thus a slurry was prepared; the slurry was applied by screen printing to the side of the lanthanum gallate solid electrolyte opposite to the fuel electrode side, so as to have a thickness of 30 µm; after drying the applied slurry, the applied slurry was maintained in the air at 1100°C for 3 hours under heating, and thus the air electrode was formed by baking to produce the above-mentioned power generation cell.

A 0.74 mm thick fuel electrode current collector made of porous nickel was laminated on the fuel electrode of the thus obtained power generation cell of the present invention, and on the other hand, a 1.0 mm thick air electrode current collector made of porous silver was laminated on the air electrode of the power generation cell of the present invention; further, a separator was laminated on each of the fuel electrode current collector and the air electrode current collector; thus a solid electrolyte fuel cell of the present invention was fabricated.

### [Conventional Example 9]

Further, for comparison, a conventional solid electrolyte fuel cell was fabricated in the following manner. First, a 1 N aqueous solution of nickel nitrate, a 1 N aqueous solution of cerium nitrate and a 1 N aqueous solution of samarium nitrate were respectively prepared; these aqueous solutions were weighed out to be mixed together so as for the volume ratio of NiO to (Ce_{0.8}Sm_{0.2})O₂ to be 60:40; the solution thus obtained was atomized with an atomizer, and introduced with air as carrier gas into a vertical pipe furnace to be heated to 1000°C to yield an oxide mixed powder having the volume ratio of NiO to (Ce_{0.8}Sm_{0.2})O₂ to be 60:40. By using this oxide mixed powder, a slurry was prepared. The slurry was used to be applied to one side of the lanthanum gallate solid electrolyte prepared in advance, sintered to form a fuel electrode, and further, an air electrode was formed; thus a conventional power generation cell was produced. A 1 mm thick fuel electrode current collector made of porous nickel was laminated on one side of the conventional power generation cell, and further, a separator was laminated thereon; on the other hand, a 1.2 mm thick air electrode current collector made of porous silver was laminated on the other side of the conventional power generation cell, and further a separator was laminated thereon; thus a conventional solid electrolyte fuel cell was fabricated.

By using the thus obtained solid electrolyte fuel cell of Example 9 according to the present invention and the thus obtained solid electrolyte fuel cell of Conventional Example 9, the power generation test was carried out under the following conditions (the conditions in which an insufficiently reformed hydrogen gas containing 5% of hydrocarbon was used), and the results thus obtained are shown in Table 9.

### <Power Generation Test>

Temperature: 750°C
Fuel gas: Hydrogen (containing 5% of hydrocarbon)
Fuel gas flow rate: 0.34 L/min (= 3 cc/nin/cm²)
Oxidant gas: Air
Oxidant gas flow rate: 1.7 L/min (= 15 cc/nin/cm²)
Under the above-described power generation conditions, power was generated, and the cell voltage, output power, output power density and power generation efficiency were measured. The results thus obtained are shown in Table 9.

### [Table 9]

As can be seen from the results shown in Table 9, although the solid electrolyte fuel cell of Example 9 and the solid electrolyte fuel cell of Conventional Example 9 are different from each other only in the fuel electrode structure but the same in the other structures, when power generation is carried out under the conditions that there is used as the fuel gas a hydrogen gas containing hydrocarbon gas remaining therein as a result of insufficient reformation, the solid electrolyte fuel cell of Example 9, as compared to the solid electrolyte fuel cell of Conventional Example 9, exhibits a better value for any of the load current density, fuel utilization rate, cell voltage, output power, output power density and power generation efficiency.

### Industrial Applicability

The solid electrolyte fuel cell incorporating the power generation cell including the fuel electrode of the present invention can further increase the service life thereof. The solid electrolyte fuel cell incorporating the power generation cell including the fuel electrode of the present invention does not decrease the power generation efficiency even when power is generated by using as the fuel gas an insufficiently reformed hydrogen gas containing an extremely small amount of remaining hydrocarbon gas, and hence can generate power highly efficiently irrespective of the purity of the hydrogen gas as the fuel gas.

**[Table 1]**

| Type | The time in which the output voltage was decreased from 0.8 V to 0.6 V (hours) |
|---|---|
| Comparative Example 1 Solid electrolyte fuel cell, not according to the invention | 5000 |
| Conventional Example 1 Solid electrolyte fuel cell | 2500 |

**[Table 2]**

| Type | Open-circuit voltage (V) | Fuel utilization rate (%) | Cell voltage (V) | Output power (W) | Output power ensity (W/cm²) | Power generation efficiency LHV (%) |
|---|---|---|---|---|---|---|
| Comparative Example 2 Solid electrolyte fuel cell, not according to the invention | 1.089 | 80 | 0.668 | 78.2 | 0.691 | 42.7 |
| Conventional Example 2 Solid electrolyte fuel cell | 1.091 | 80 | 0.646 | 75.6 | 0.668 | 41.2 |

**[Table 3]**

| Type | Type of the used power generation cell | Fuel electrode material used for fabrication of power generation cell | Properties of solid electrolyte fuel cell | | | |
|---|---|---|---|---|---|---|
| | | | Cell voltage (V) | Output power (W) | Output power density (W/cm²) | Power generation efficiency LHV (%) |
| Comparative Example 3 Solid electrolyte fuel cell, not according to the invention | Power generation cell of the present invention | Fuel electrode material of the present invention (Ru-supported SDC) | 0.810 | 27.7 | 0.245 | 45.3 |
| Conventional Example 3 Solid electrolyte fuel cell | Conventional power generation cell | Conventional fuel electrode material (Ni-SDC) | 0.785 | 26.8 | 0.237 | 43.9 |

**[Table 4]**

| Type | Type of the used power generation cell | Fuel electrode material used for fabrication of power generation cell | Properties of solid electrolyte fuel cell | | | |
|---|---|---|---|---|---|---|
| | | | Cell voltage (V) | Output power (W) | Output power density (W/cm²) | Power generation efficiency LHV (%) |
| Comparative Example 4 Solid electrolyte fuel cell, not according to the invention | Power generation cell of the present invention | Fuel electrode material of the present invention (Ru-supported GDC) | 0.790 | 27.0 | 0.239 | 44.1 |
| Conventional Example 4 Solid electrolyte fuel cell | Conventional power generation cell | Conventional fuel electrode material (Ni-GDC) | 0.765 | 26.1 | 0.231 | 42.7 |

**[Table 5]**

| Type | Type of the used power generation cell | Fuel electrode material used for fabrication of power generation cell | Properties of solid electrolyte fuel cell | | | |
|---|---|---|---|---|---|---|
| | | | Cell voltage (V) | Output power (W) | Output power density (W/cm²) | Power generation efficiency LHV (%) |
| Comparative Example 5 Solid electrolyte fuel cell, not according to the invention | Power generation cell of the present invention | Fuel electrode material of the present invention (Ru-supported LDC) | 0.785 | 26.8 | 0.237 | 43.9 |
| Conventional Example 5 Solid electrolyte fuel cell | Conventional power generation cell | Conventional fuel electrode material (Ni-LDC) | 0.750 | 25.6 | 0.227 | 41.9 |

**[Table 6]**

| Type | Type of the used power generation cell | Fuel electrode material used for fabrication of power generation cell | Properties of solid electrolyte fuel cell | | | |
|---|---|---|---|---|---|---|
| | | | Cell voltage (V) | Output power (W) | Output power density (W/cm²) | Power generation efficiency LHV (%) |
| Comparative Example 6 Solid electrolyte fuel cell, not according to the invention | Power generation cell of the present invention | Fuel electrode material of the present invention (Ru-supported YDC) | 0.770 | 26.3 | 0.233 | 43.0 |
| Conventional Example 6 Solid electrolyte fuel cell | Conventional power generation cell | Conventional fuel electrode material (Ni-YDC) | 0.745 | 25.5 | 0.225 | 41.6 |

**[Table 7]**

| Type | Type of the used power generation cell | Fuel electrode material used for fabrication of power generation cell | Properties of solid electrolyte fuel cell | | | |
|---|---|---|---|---|---|---|
| | | | Cell voltage (V) | Output power (W) | Output power density (W/cm²) | Power generation efficiency LHV (%) |
| Comparative Example 7 Solid electrolyte fuel cell, not according to the invention | Power generation cell of the present invention | Fuel electrode material of the present invention (Ru-supported CDC) | 0.765 | 26.1 | 0.231 | 42.7 |
| Conventional Example 7 Solid electrolyte fuel cell | Conventional power generation cell | Conventional fuel electrode material (Ni-CDC) | 0.740 | 25.3 | 0.224 | 41.3 |

**[Table 8]**

| Type | Open-circuit voltage (V) | Fuel utilization rate (%) | Cell voltage (V) | Output power (W) | Output power density (W/cm²) | Power generation efficiency LHV (%) |
|---|---|---|---|---|---|---|
| Example 8 Solid electrolyte fuel cell | 1.003 | 70 | 0.810 | 27.5 | 0.243 | 44.9 |
| Conventional Example 8 Solid electrolyte fuel cell | 0.995 | 70 | 0.790 | 26.8 | 0.237 | 43.8 |

**[Table 9]**

| Type | Load current density (A/cm²) | Fuel utilization rate (%) | Cell voltage (V) | Output power (W) | Output power density (W/cm²) | Power generation efficiency LHV (%) |
|---|---|---|---|---|---|---|
| Example 9 Solid electrolyte fuel cell | 0.3 | 70 | 0.815 | 27.7 | 0.245 | 45.2 |
| Conventional Example 9 Solid electrolyte fuel cell | 0.3 | 70 | 0.790 | 26.8 | 0.237 | 43.8 |

## Claims

1. A power generation cell for a solid electrolyte fuel cell, comprising a solid electrolyte (21) made of a lanthanum gallate oxide ion conductor, a porous air electrode formed on one side of the solid electrolyte (21) and a porous fuel electrode (22) formed on the other side of the solid electrolyte (21), **characterized in that**:
in the fuel electrode (22), to the surface of the framework of porous nickel (24) having a framework structure in which a network is formed, particles (23) of the fuel electrode material prepared by supporting ruthenium metal on the B-doped ceria represented by the general formula Ce₁₋ₘBₘO₂ wherein B represents one or two or more of Sm, Gd, Y and Ca, and m satisfies the relation 0 < m ≤ 0.4 are fixed; and
the Ru-supported B-doped ceria particles (23) are fixed most abundantly to the interface (25) in which the fuel electrode (22) contacts with the solid electrolyte (21) and to the surface, in the vicinity of the interface (25), of the framework of the porous nickel (24).

2. The power generation cell for a solid electrolyte fuel cell according to claim 1, **characterized in that** the Ru-supported B-doped ceria particles fixed to the surface of the framework of the porous nickel are fine Ru-supported B-doped ceria particles having particle sizes of less than 100 nm.

3. The power generation cell for a solid electrolyte fuel cell according to claim 1, **characterized in that** the portion in which the Ru-supported B-doped ceria particles are fixed most abundantly to the interface in which the fuel electrode contacts with the solid electrolyte and to the surface, in the vicinity of the interface, of the framework of the porous nickel is formed in a layer over a thickness range of 10 to 20 µm from the surface of the solid electrolyte.

4. A solid electrolyte fuel cell comprising a power generation cell according to claim 1.

5. A power generation cell for a solid electrolyte fuel cell, comprising a solid electrolyte (31) made of a lanthanum gallate oxide ion conductor, a porous air electrode formed on one side of the solid electrolyte (31) and a porous fuel electrode (32) formed on the other side of the solid electrolyte (31), **characterized in that**:
in the fuel electrode (32), to the surface of a framework of a porous mixed sintered body (38) having a framework structure in which a network is formed by particles of the B-doped ceria (34a) represented by the general formula Ce₁₋ₘBₘO₂ wherein B represents one or two or more of Sm, Gd, Y and Ca, and m satisfies the relation 0 < m ≤ 0.4 and particles of nickel oxide (34), the particles of the fuel electrode material (33) prepared by supporting ruthenium metal on the B-doped ceria are fixed; and
the Ru-supported B-doped ceria particles (33) are fixed most abundantly to the interface (35) in which the fuel electrode (32) contacts with the solid electrolyte (31) and to the surface, in the vicinity of the interface, of the framework of the porous mixed sintered body (38).

6. The power generation cell for a solid electrolyte fuel cell according to claim 5, **characterized in that** the Ru-supported B-doped ceria particles fixed to the surface of the framework of the porous mixed sintered body are fine Ru-supported B-doped ceria particles having particle sizes of less than 100 nm.

7. The power generation cell for a solid electrolyte fuel cell according to claim 5, **characterized in that** the portion in which the Ru-supported B-doped ceria particles are fixed most abundantly to the interface in which the fuel electrode contacts with the solid electrolyte and to the surface, in the vicinity of the interface, of the framework of the porous mixed sintered body is formed in a layer over a thickness range of 10 to 20 µm from the surface of the solid electrolyte.

8. A solid electrolyte fuel cell comprising a power generation cell according to claim 5.

## Patentansprüche

1. Stromerzeugungszelle für eine Festelektrolytbrennstoffzelle, umfassend einen aus einem Lanthangallat-Oxidionenleiter hergestellten Festelektrolyt (21), eine an einer Seite des Festelektrolyts (21) gebildete poröse Luftelektrode und eine an der anderen Seite des Festelektrolyts (21) gebildete poröse Brennstoffelektrode (22), **dadurch gekennzeichnet, dass**
in der Brennstoffelektrode (22) an der Oberfläche des porösen Nickelgerüstes (24) mit einer Gerüststruktur, in der ein Netz gebildet ist, durch stützendes Ruthenium-Metall auf dem B-dotiertem Cer hergestellte Partikel (23) des Materials der Brennstoffelektrode, dargestellt durch die allgemeine Formel Ce₁₋ₘBₘO₂, worin B ein oder zwei oder mehrere Sm, Gd, Y und Ca darstellt und m das Verhältnis 0 < m ≤ 0,4 erfüllt, fixiert sind, und
die Ru-gestützten, B-dotierten Cer-Partikel (23) äußerst reichlich auf der Zwischenphase (25), in der die Brennstoffelektrode (22) mit dem Festelektrolyt (21) in Kontakt tritt, und an der der Zwischenphase (25) benachbarten Oberfläche des porösen Nickelgerüstes (24) fixiert sind.

2. Stromerzeugungszelle für eine Festelektrolytbrennstoffzelle nach Anspruch 1,
**dadurch gekennzeichnet, dass**
die Ru-gestützten, B-dotierten, an der Oberfläche des porösen Nickelgerüstes fixierten Cer-Partikel feine Ru-gestützte, B-dotierte Cer-Partikel mit Partikelgrößen von weniger als 100 nm sind.

3. Stromerzeugungszelle für eine Festelektrolytbrennstoffzelle nach Anspruch 1,
**dadurch gekennzeichnet, dass**
der Anteil, auf dem die Ru-gestützten, B-dotierten Cer-Partikel äußerst reichlich auf der Zwischenphase, in der die Brennstoffelektrode mit dem Festelektrolyt in Kontakt tritt, und auf der der Zwischenphase benachbarten Oberfläche des porösen Nickelgerüstes fixiert sind, in einer Schichtdicke im Bereich von 10 bis 20 µm von der Oberfläche des Festelektrolyts gebildet ist.

4. Festelektrolytbrennstoffzelle umfassend eine Stromerzeugungszelle nach Anspruch 1.

5. Stromerzeugungszelle für eine Festelektrolytbrennstoffzelle, umfassend einen aus einem Lanthangallat-Oxidionenleiter hergestellten Festelektrolyt (31), eine an einer Seite des Festelektrolyts (31) gebildete poröse Luftelektrode und eine an der anderen Seite des Festelektrolyts (31) gebildete poröse Brennstoffelektrode (32)
**dadurch gekennzeichnet, dass**
in der Brennstoffelektrode (32) an der Oberfläche eines Gerüsts eines porösen Mischsinterkörpers (38) mit einer Gerüststruktur, bei der durch Partikel des B-dotierten Cers (34a), dargestellt durch die allgemeine Formel Ce₁₋ₘBₘO₂, worin B ein oder zwei oder mehrere Sm, Gd, Y und Ca darstellt und m das Verhältnis 0 < m ≤ 0,4 erfüllt, und Nickeloxidpartikel (34) ein Netz gebildet ist, wobei die durch stützendes Ruthenium-Metall auf dem B-dotierten Cer hergestellten Partikel des Brennstoffelektrodenmaterials (33) fixiert sind, und
die Ru-gestützten, B-dotierten Cer-Partikel (33) äußerst reichlich auf der Zwischenphase (35), in der die Brennstoffelektrode (32) mit dem Festelektrolyt (31) in Kontakt tritt, und an der der Zwischenphase (25) benachbarten Oberfläche des Gerüsts des porösen Mischsinterkörpers (38) fixiert sind.

6. Stromerzeugungszelle für eine Festelektrolytbrennstoffzelle nach Anspruch 5,
**dadurch gekennzeichnet, dass**
die Ru-gestützten, B-dotierten, an der Oberfläche des Gerüsts des porösen Mischsinterkörpers fixierten Cer-Partikel feine Ru-gestützte, B-dotierte Cer-Partikel mit Partikelgrößen von weniger als 100 nm sind.

7. Stromerzeugungszelle für eine Festelektrolytbrennstoffzelle nach Anspruch 5,
**dadurch gekennzeichnet, dass**
der Anteil, auf dem die Ru-gestützten, B-dotierten Cer-Partikel äußerst reichlich auf der Zwischenphase, in der die Brennstoffelektrode mit dem Festelektrolyt in Kontakt tritt, und auf der der Zwischenphase benachbarten Oberfläche des Gerüsts des porösen Mischsinterkörpers fixiert sind, in einer Schichtdicke im Bereich von 10 bis 20 µm von der Oberfläche des Festelektrolyts gebildet istd.

8. Festelektrolytbrennstoffzelle umfassend eine Stromerzeugungszelle nach Anspruch 5.

## Revendications

1. Cellule génératrice d'électricité pour pile à combustible à électrolyte solide, comprenant un électrolyte solide (21) fait d'un conducteur ionique de type oxyde de gallate de lanthane, une électrode à air poreuse formée d'un côté de l'électrolyte solide (21) et une électrode à combustible poreuse (22) formée de l'autre côté de l'électrolyte solide (21), **caractérisée en ce que** :
dans l'électrode à combustible (22), sur la surface de l'édifice du nickel poreux (24) ayant une structure d'édifice dans laquelle un réseau est formé, des particules (23) du matériau d'électrode à combustible préparées par support de métal ruthénium sur l'oxyde de cérium dopé B représenté par la formule générale Ce₁₋ₘBₘO₂ dans laquelle B représente un ou deux éléments, ou plus, parmi Sm, Gd, Y et Ca, et m satisfait la relation 0 < m ≤ 0,4, sont fixées; et
les particules d'oxyde de cérium dopé B supportées sur Ru (23) sont fixées de manière très abondante sur l'interface (25) de contact de l'électrode à combustible (22) avec l'électrolyte solide (21) et sur la surface, au voisinage de l'interface (25), de l'édifice du nickel poreux (24).

2. Cellule génératrice d'électricité pour pile à combustible à électrolyte solide selon la revendication 1, **caractérisée en ce que** les particules d'oxyde de cérium dopé B supportées sur Ru fixées à la surface de l'édifice du nickel poreux sont de fines particules d'oxyde de cérium dopé B supportées sur Ru ayant des tailles de particules inférieures à 100 nm.

3. Cellule génératrice d'électricité pour pile à combustible à électrolyte solide selon la revendication 1, **caractérisée en ce que** la partie sur laquelle les particules d'oxyde de cérium dopé B supportées sur Ru sont fixées de manière très abondante sur l'interface de contact de l'électrode à combustible avec l'électrolyte solide et sur la surface, au voisinage de l'interface, de l'édifice du nickel poreux est formée sous la forme d'une couche dans une plage d'épaisseurs de 10 à 20 µm à partir de la surface de l'électrolyte solide.

4. Pile à combustible à électrolyte solide comprenant une cellule génératrice d'électricité selon la revendication 1.

5. Cellule génératrice d'électricité pour pile à combustible à électrolyte solide, comprenant un électrolyte solide (31) fait d'un conducteur ionique de type oxyde de gallate de lanthane, une électrode à air poreuse formée d'un côté de l'électrolyte solide (31) et une électrode à combustible poreuse (32) formée de l'autre côté de l'électrolyte solide (31), **caractérisée en ce que** :
dans l'électrode à combustible (32), sur la surface d'un édifice d'un corps poreux fritté mixte (38) ayant une structure d'édifice dans laquelle un réseau est formé par des particules d'oxyde de cérium dopé B (34a) représentées par la formule générale Ce₁₋ₘBₘO₂ dans laquelle B représente un ou deux éléments, ou plus, parmi Sm, Gd, Y et Ca, et m satisfait la relation 0 < m ≤ 0,4, et des particules d'oxyde de nickel (34), les particules du matériau d'électrode à combustible (33) préparées par support de métal ruthénium sur l'oxyde de cérium dopé D sont fixées, et
les particules d'oxyde de cérium dopé B supportées sur Ru (33) sont fixées de manière très abondante sur l'interface (35) de contact de l'électrode à combustible (32) avec l'électrolyte solide (31) et sur la surface, au voisinage de l'interface, de l'édifice du corps poreux fritté mixte (38).

6. Cellule génératrice d'électricité pour pile à combustible à électrolyte solide selon la revendication 5, **caractérisée en ce que** les particules d'oxyde de cérium dopé B supportées sur Ru fixées à la surface de l'édifice du corps poreux fritté mixte sont de fines particules d'oxyde de cérium dopé B supportées sur Ru ayant des tailles de particules inférieures à 100 nm.

7. Cellule génératrice d'électricité pour pile à combustible à électrolyte solide selon la revendication 5, **caractérisée en ce que** la partie sur laquelle les particules d'oxyde de cérium dopé B supportées sur Ru sont fixées de manière très abondante sur l'interface de contact de l'électrode à combustible avec l'électrolyte solide et sur la surface, au voisinage de l'interface, de l'édifice du corps poreux fritté mixte est formée sous la forme d'une couche dans une plage d'épaisseurs de 10 à 20 µm à partir de la surface de l'électrolyte solide.

8. Pile à combustible à électrolyte solide comprenant une cellule génératrice d'électricité selon la revendication 5.
